(19) Europäisches Patentamt
European Patent Office
Office européen des brevets

(11) **EP 4 021 055 A1**

(12) **EUROPEAN PATENT APPLICATION**
published in accordance with Art. 153(4) EPC

(43) Date of publication:
**29.06.2022 Bulletin 2022/26**

(51) International Patent Classification (IPC):
***H04W 16/28*** (2009.01)  ***H04W 24/10*** (2009.01)

(21) Application number: **19943612.2**

(52) Cooperative Patent Classification (CPC):
**H04W 16/28; H04W 24/10**

(22) Date of filing: **23.08.2019**

(86) International application number:
**PCT/JP2019/033177**

(87) International publication number:
**WO 2021/038668 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
**Tokyo 100-6150 (JP)**
• **NAGATA, Satoshi**
**Tokyo 100-6150 (JP)**
• **LIU, Wenjia**
**Beijing 100190 (CN)**
• **WANG, Jing**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57) A terminal according to an aspect of the present disclosure includes a control section that generates a channel state information (CSI) report including a first field indicating each of a plurality of precoding matrix indicators (PMIs) and a second field indicating a delay corresponding to the PMI, and a transmitting section that transmits the CSI report. This can prevent the reliability of the CSI from degrading while suppressing the increase in the UL overhead.

| CSI report number | CSI fields |
|---|---|
| CSI report #n | CRI, if reported |
| | Rank Indicator, if reported |
| | Layer Indicator, if reported |
| | Zero padding bits, if reported |
| | PMI wideband information fields, or codebook index, if reported |
| | DI wideband information fields, if reported |
| | Wideband CQI, if reported |

FIG. 7

EP 4 021 055 A1

**Description**

Technical Field

The present disclosure relates to a terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In Rel. 15 NR, a wideband and a subband are supported as frequency granularities for channel state information (CSI) reporting.

Here, the wideband refers to an entire band of which the CSI is to be reported, for example, an entire certain carrier (also referred to as a component carrier (CC), a cell, a serving cell, or the like). The subband is part of the wideband, and refers to one or more physical resource blocks (PRBs) (or resource blocks (RBs)), for example. A size of the subband (subband size, for the example, the number of PRBs) may be determined depending on a size of the wideband (wideband size, for example, the number of PRBs).

In future radio communication systems (for example, NR in Rel. 16 or later versions), it is assumed that at least one of a wide bandwidth (for example, a bandwidth wider than in NR in Rel. 15) and a high frequency band (for example, a frequency band higher than any of 7.125 GHz, 24.25 GHz, and 52.6 GHz, or a frequency band higher than in NR in Rel. 15) is usable.

However, in the future radio communication systems, if the wideband of which the CSI is to be reported is broadened, the subband size depending on the wideband size is larger than a coherence bandwidth, which may result in degradation in reliability of the CSI. On the other hand, if the subband size is made sufficiently smaller than the coherence bandwidth in the broadened wideband, an uplink (UL) overhead may increase.

Then, the present disclosure has an object to provide a terminal and a radio communication method capable of preventing the reliability of the CSI from degrading while suppressing the increase in the UL overhead.

Solution to Problem

A terminal according to an aspect of the present disclosure includes a control section that generates a channel state information (CSI) report including a first field indicating each of a plurality of precoding matrix indicators (PMIs) and a second field indicating a delay corresponding to the PMI, and a transmitting section that transmits the CSI report.

Advantageous Effects of Invention

According to an aspect of the present disclosure, it is possible to prevent the reliability of the CSI from degrading while suppressing the increase in the UL overhead.

Brief Description of Drawings

FIG. 1 is a diagram to show an example of an operation of CSI reporting;
FIGS. 2A and 2B are diagrams to show examples of feedback of wideband information;
FIG. 3 is a diagram to show an example of a precoder based on the wideband information;
FIG. 4 is a diagram to show another example of the precoder based on the wideband information;
FIG. 5 is a diagram to show still another example of the precoder based on the wideband information;
FIG. 6 is a diagram to show an example of a configuration of a CSI report in UCI;
FIG. 7 is a diagram to show an example of CSI report #n according to Embodiment 1;
FIG. 8 is a diagram to show another example of CSI report #n according to Embodiment 1;
FIG. 9 is a diagram to show an example of mapping of the CSI report according to Embodiment 1;
FIG. 10 is a diagram to show an example of CSI part 1 of CSI report #n according to Embodiment 2-2-1;
FIG. 11 is a diagram to show an example of CSI part 2 of CSI report #n according to Embodiment 2-2-1;
FIGS. 12A and 12B are diagrams to show examples of mapping of the CSI report according to Embodiment 2-2-1;
FIG. 13 is a diagram to show an example of coding and rate matching of the UCI according to Embodiment 2-2-1;
FIG. 14 is a diagram to show an example of the CSI part 1 of CSI report #n according to Embodiment 2-2-2;
FIG. 15 is a diagram to show an example of the CSI part 2 of CSI report #n according to Embodiment 2-2-2;
FIG. 16 is a diagram to show an example of mapping of the CSI part 1 according to Embodiment 2-2-2;
FIG. 17 is a diagram to show an example of mapping of the CSI part 2 according to Embodiment 2-2-2;
FIG. 18 is a diagram to show an example of coding and rate matching of the UCI according to Embodiment 2-2-2;
FIG. 19 is a diagram to show an example of the CSI part 1 of CSI report #n according to Embodiment 2-2-3-1;
FIG. 20 is a diagram to show an example of the CSI part 2 of CSI report #n according to Embodiment 2-2-3-1;
FIG. 21 is a diagram to show an example of the CSI part 1 of CSI report #n according to according to Embodiment 2-2-3-2;
FIG. 22 is a diagram to show an example of wideband report # 1 in the CSI part 2 of CSI report #n according to Embodiment 2-2-3-2;
FIGS. 23A and 23B are diagrams to show examples of wideband reports #q-1 and #q in the CSI part 2 of CSI report #n according to Embodiment 2-2-3-2;
FIG. 24 is a diagram to show an example of mapping of the CSI part 1 according to Embodiment 2-2-3;
FIG. 25 is a diagram to show an example of mapping of the CSI part 2 according to Embodiment 2-2-3;
FIG. 26 is a diagram to show an example of coding and rate matching of the UCI according to Embodiment 2-2-3;
FIG. 27 is a diagram to show an example of the CSI part 1 of CSI report #n according to Embodiment 3-1;
FIG. 28 is a diagram to show an example of the CSI part 1 of CSI report #n according to Embodiment 3-2-1;
FIGS. 29A and 29B are diagrams to show examples of the CSI part 2 and a CSI part m of CSI report #n according to Embodiment 3-2-1;
FIG. 30 is a diagram to show an example of the CSI part 1 of CSI report #n according to Embodiment 3-2-2;
FIG. 31 is a diagram to show an example of the CSI part 2 of CSI report #n according to Embodiment 3-2-2;
FIGS. 32A and 32B are diagrams to show examples of a CSI part m-1 and a CSI part m of CSI report #n according to Embodiment 3-2-2;
FIG. 33 is a diagram to show an example of CSI part 3 of CSI report #n according to Embodiment 3-2-2;
FIGS. 34A and 34B are diagrams to show examples of mapping of a CSI report according to Embodiment 3;
FIG. 35 is a diagram to show an example of coding and rate matching of the UCI according to Embodiment 3;
FIG. 36 is a diagram to show an example of a schematic structure of a radio communication system according to one embodiment;
FIG. 37 is a diagram to show an example of a structure of a base station according to one embodiment;
FIG. 38 is a diagram to show an example of a structure of a user terminal according to one embodiment; and
FIG. 39 is a diagram to show an example of a hardware structure of the base station and the user terminal according to one embodiment.

Description of Embodiments

(CSI Report (or Reporting))

In NR in Rel. 15, a terminal (also referred to as a user terminal, User Equipment (UE), or the like) generates (or determines, calculates, estimates, measures, and so on) channel state information (CSI) on the basis of a reference signal (RS) (or a resource for the RS) to transmit (or report, feed back, and so on) the generated CSI to a network (for example, a base station). The CSI may be transmitted to the base station on an uplink control channel (for example, Physical Uplink Control Channel (PUCCH)) or an uplink shared channel (for example, Physical Uplink Shared Channel (PUSCH)), for example.

The RS used to generate the CSI may be, for example, at least one of a channel state information reference signal (CSI-RS), a synchronization signal/broadcast channel (Synchronization Signal / Physical Broadcast Channel) (SS/PBCH) block, a synchronization signal (SS), a demodulation reference signal (DMRS), and the like.

The CSI-RS may include at least one of a non zero power (NZP) CSI-RS and CSI-Interference Management (CSI-IM). The SS/PBCH block is a block including an SS and a PBCH (and a corresponding DMRS), and may be referred to as an SS block (SSB) or the like. The SS may include at least one of a primary synchronization signal (PSS) and a secondary synchronization signal (SSS).

The CSI may include at least one parameter (CSI parameter) such as a channel quality indicator (CQI), a precoding matrix indicator (PMI), a CSI-RS resource indicator (CRI), an SS/PBCH block resource indicator (SS/PBCH block indicator (SSBRI)), a layer indicator (LI), a rank indicator (RI), an L1-RSRP (reference signal received power in Layer 1 (Layer 1 Reference Signal Received Power)), an L1-RSRQ (Reference Signal Received Quality), an L1-SINR (Signal-to-Noise and Interference Ratio or Signal to Interference plus Noise Ratio), and an L1-SNR (Signal to Noise Ratio).

The UE may receive information about the CSI reporting (report configuration information) to control the CSI reporting on the basis of the report configuration information. The report configuration information may be a radio resource control (RRC) information element (IE) "CSI-ReportConfig", for example. Note that in the present disclosure, the RRC IE may be interpreted as an RRC parameter, a higher layer parameter, or the like.

The report configuration information (for example, the RRC IE "CSI-ReportConfig") may include at least one of the following items, for example.

- Information about a CSI reporting type (report type information, for example, an RRC IE "reportConfigType").
- Information about one or more quantities of the CSI to be reported (one or more CSI parameters) (report quantity information, for example, an RRC IE "reportQuantity").
- Information about a resource for RS used to generate the quantity (the CSI parameter) (resource information, for example, an RRC IE "CSI-ResourceConfigId").
- Information about a frequency domain of which the CSI is to be reported (frequency domain information, for example, an RRC IE "reportFreqConfiguration").

For example, the report type information may indicate a periodic CSI (P-CSI) report, an aperiodic CSI (A-CSI)) report, or a semi-persistent (semi-continuous) CSI report (SP-CSI report).

The report quantity information may specify at least one combination of the CSI parameters described above (for example, CRI, RI, PMI, CQI, LI, L1-RSRP, and the like).

The resource information may be an ID of the resource for RS. The resource of RS may include, for example, a non zero power CSI-RS resource or an SSB, and a CSI-IM resource (for example, zero power CSI-RS resource).

The frequency domain information may indicate a frequency granularity for the CSI reporting. The frequency granularity may include, for example, a wideband and a subband. The wideband refers to an entire CSI reporting band. The wideband may be, for example, an entire certain carrier (component carrier (CC), a cell, a serving cell), or an entire bandwidth part (BWP) in a certain carrier. The wideband may be interpreted as a CSI reporting band, an entire CSI reporting band, or the like.

The subband is a part within the wideband, and may include one or more resource blocks (RBs) (or physical resource blocks (PRBs)). A size of the subband may be determined depending on a size of the BWP (the number of PRBs).

The frequency domain information may indicate which PMI for the wideband or the subband is reported (the frequency domain information may include an RRC IE *"pmi-FormatIndicator"* that is used to determine either wideband PMI reporting or subband PMI reporting, for example). The UE may determine the frequency granularity for the CSI reporting (specifically, either the wideband PMI reporting or the subband PMI reporting) on the basis of at least one of the report quantity information and the frequency domain information described above.

In a case that the wideband PMI reporting is configured (determined), one wideband PMI may be reported for the entire CSI reporting band. On the other hand, in a case that the subband PMI reporting is configured, a single wideband indication $i_1$ may be reported for the entire CSI reporting band, and a subband indication (one subband indication) $i_2$ for each of one or more subbands (for example, subband indication for each subband) within the entire CSI reporting may be reported.

The UE performs channel estimation by use of the received RS to estimate a channel matrix H. The UE feeds back an index (PMI) determined on the basis of the estimated channel matrix.

The PMI may indicate a precoder matrix (also, simply referred to as a precoder) which is considered by the UE to be appropriate to use for a downlink (DL) transmission to the UE. Each value in the PMI may correspond to one precoder matrix. A set of values in the PMI may corresponds to a set of different precoder matrices called a precoder codebook (also, simply referred to as a codebook).

The CSI report may include one or more types of CSI in a spatial domain (space domain). For example, the CSI may include at least one of a first type used to select a single beam (Type 1 CSI) and a second type used to select a multi-beam (Type 2 CSI). The single beam may be interpreted as a single layer, and the multi-beam may be interpreted as a plurality of beams. Type 1 CSI may not assume multi-user multiple input multiple output (MIMO) and Type 2 CSI may assume multi-user MIMO.

The codebook may include a codebook of Type 1 CSI (also referred to as type 1 codebook or the like) and a codebook for Type 2 CSI (also referred to as type 2 codebook or the like). Type 1 CSI may include type 1 single panel CSI and type 1 multi panel CSI, for which different codebooks (type 1 single panel codebook, type 1 multi panel codebook) may be defined.

In the present disclosure, type 1 and type I may be interchangeably interpreted. In the present disclosure, type 2 and type II may be interchangeably interpreted.

An uplink control information (UCI) type may include at least one of a Hybrid Automatic Repeat reQuest ACKnowledgement (HARQ-ACK), a scheduling request (SR), and CSI. The UCI may be carried on a PUCCH or a PUSCH.

In NR in Rel. 15, the UCI can include one CSI part for wideband PMI feedback. CSI report #n, if reported, includes PMI wideband information.

In NR in Rel. 15, the UCI can include two CSI parts for subband PMI feedback. CSI part 1 includes wideband PMI information. CSI part 2 includes one pieces of wideband PMI information and some pieces of subband PMI information. The CSI part 1 and the CSI part 2 are separately coded.

The frequency granularity for the CSI reporting as described above depends on an uplink (UL) overhead. For example, a specific PUCCH format (for example, PUCCH format 0 or 2 including one or two symbols) can support only Type 1 CSI for the wideband. The size of the subband is increased as the CSI reporting band (for example, the size of the BWP) is increased, which prevents the UL overhead increase due to the CSI (for example, PMI) reporting per subband caused by the CSI reporting band extension.

In NR in Rel. 16 and later versions, it is assumed that a bandwidth wider than in NR in Rel. 15 is usable. In NR in Rel. 16 and later versions, it is also assumed that a high frequency band (for example, a frequency band higher than any of 7.125 GHz, 24.25 GHz, and 52.6 GHz, or a frequency band higher than in NR in Rel. 15) is usable. Note that the frequency band may be referred to as a frequency range (FR), or the like.

In NR in Rel. 15, the subband size is smaller than a coherence bandwidth (that is a bandwidth with a magnitude of frequency correlation being 90%), and thus, subband-based precoding is effective. For example, in a case that the CSI reporting band includes 51 PRBs, the coherence bandwidth is 40 PRBs, and the subband size may be 4 or 8 PRBs.

On the other hand, in a case that the CSI reporting band is wider than in NR in Rel. 15, the subband size is larger than the coherence bandwidth, which may resultantly deteriorate CSI reporting accuracy. For example, in a case that the CSI reporting band includes 260 PRBs, the coherence bandwidth is 12 PRBs, but the subband size is assumed to be 16 or 32 PRBs. On the other hand, if a ratio of the subband size to the CSI reporting band is maintained similar to NR in Rel. 15 (the subband size is made sufficiently smaller than the coherence bandwidth), the UL overhead may increase.

As described above, in the future radio communication systems, the UL overhead increasing, the reliability of the CSI degrading, and the like are problems.

Here, in a case that at least one of the bandwidth wider and the frequency band higher than in NR in Rel. 15 is used, contribution to sparsity (sparseness) of a precoder using a delay domain (delay domain precoder) is assumed to be higher than a precoder using the spatial domain and the frequency domain (space-frequency domain) in NR in Rel. 15.

Then, the inventors of the present invention came up with the idea that information for the delay domain precoder (for example, at least one of delay information and coefficient information described later) is fed back, as the information about the entire CSI reporting band (wideband) (wideband information), to prevent the reliability of the CSI from degrading while suppressing the increase in the UL overhead.

Hereinafter, embodiments according to the present disclosure will be described in detail with reference to the drawings. The radio communication methods according to respective embodiments may each be employed individually, or may be employed in combination.

(Radio Communication Method)

In the present disclosure, the precoder and the precoding may be interchangeably interpreted. A precoding vector, a precoding matrix, a channel vector, and a channel matrix may be interchangeably interpreted. The delay may be interpreted as an amount of delay (a delay amount) or the like. The delay domain may be interpreted as a transform domain described later and one or more domains defined as the transform domain.

In the present disclosure, an indicator and an indication may be interchangeably interpreted.

In the present embodiment, the delay domain precoder is mainly described, but at least the delay domain is used. For example, the present embodiment is adequately applicable to a precoder using spatial and delay domains (space-delay domain) (also referred to as a one-dimensional transform domain precoder, a one-dimensional sparse transform domain precoder, a space-delay domain precoder, or the like), and a precoder using an angular-delay domain (a two-dimensional transform domain precoder (2D-TDP), a two-dimensional sparse transform domain precoder (2D sparse TDP), an angular-delay domain precoder, or the like). An angle may be an angle of arrival or an angle of departure.

(Delay Domain Precoder)

The information for the delay domain precoder fed back as the wideband information is mainly described.

<Delay Domain Precoder>

The delay domain precoder may be generated (determined) on the basis of at least one of parameters described below.

- Coefficient(s) g for Q delays (Q different delay values)
- Delays $\tau$ for the coefficient(s) g, or $\tau$ for a quantized delay

Here, the coefficient g may be defined for each of Q delays (or per delay). For example, $g \in C^{Q \times 1}$. The delays $\tau$ for the coefficient (s) g may be, for example, $\tau \in R^{Q \times 1}$. Here, $R^{Q \times 1}$ may be a set of Q non-quantized delays $\tau$. The quantized delay $\tau$ may be, for example, $\tau \in N^{Q \times 1}$. Here, $N^{Q \times 1}$ may be a set of quantized Q delays $\tau$. Note that the delay may be interpreted as a delay time, a time, or the like.

The coefficient g may be transformed from the delay domain to the frequency domain by multiplying by a function of the delay $\tau$ corresponding to the coefficient g and adding a result of multiplication. A coefficient for the frequency domain (an element of the precoder) may be obtained (derived) by the transform from the delay domain to the frequency domain.

For example, a precoder d for N subcarriers on the basis of the coefficient g and the delay $\tau$ may be expressed by Equation 1 below. Note that in Equation 1, Q represents the number of delays $\tau$ or coefficients g. q represents an index of the delay $\tau$ or the coefficient g, and $0 \le q \le Q$. n represents an index of the subcarrier, and $0 \le n \le N$.

[Math. 1]

(Equation 1)

$$d = \begin{bmatrix} \sum_{q=0}^{Q-1} g_q \\ \vdots \\ \sum_{q=0}^{Q-1} g_q e^{-j2\pi n \tau_q} \\ \vdots \\ \sum_{q=0}^{Q-1} g_q e^{-j2\pi(N-1)\tau_q} \end{bmatrix} \in \mathbb{C}^{N \times 1}$$

Here, a coefficient for subcarrier #n (the n-th subcarrier) at domain delay #q (the q-th delay) transformed to the frequency domain may be expressed by Expression 2 below. Power normalization may be expressed by Expression 3 below.

[Math. 2]

(Expression 2)

$$\sum_{q=0}^{Q-1} g_q e^{-j2\pi n\tau_q}$$

(Expression 3)

$$\sqrt{N}\, d/\|d\|$$

For example, a precoder $d_{Q,\,n}$ for subcarrier #n ($0 \le n \le N$) may be expressed by Equations 4, 5, and 6 below if the number Q of delays is 1, 2, and 3, respectively.

[Math. 3]

(Equation 4)

$$\text{If } Q = 1, \quad d_{1,n} = g_0 \cdot e^{-j2\pi n\tau_0}$$

(Equation 5)

$$\text{If } Q = 2, \quad d_{2,n} = d_{1,n} + g_1 \cdot e^{-j2\pi n\tau_1}$$

(Equation 6)

$$\text{If } Q = 3, \quad d_{3,n} = d_{2,n} + g_2 \cdot e^{-j2\pi n\tau_2}$$

For example, in Equation 4, the number of delays Q is Q = 1, and thus, a result $g_0 \cdot e^{-j2\pi n\tau 0}$ of multiplying a coefficient $g_0$ for delay #0 (q = 0) by a delay $\tau_0$ for coefficient #0 may be used to derive a precoder $d_{1,\,n}$ for subcarrier #n at delay #0.

In Equation 5, the number of delays Q is Q = 1, and thus, a result of adding the precoder $d_{1,\,n}$ for subcarrier #n at delay #0 to a result $g_1 \cdot e^{-j2\pi n\tau 1}$ of multiplying a coefficient $g_1$ for delay #1 (q = 1) by a delay $\tau_1$ for a coefficient #1 may be used to derive a precoder $d_{2,\,n}$ for subcarrier #n at delays #0, and #1.

In Equation 6, the number of delays Q is Q = 3, and thus, a result of adding the precoder $d_{2,\,n}$ for subcarrier #n at delays #0 and #1 to a result $g_2 \cdot e^{-j2\pi n\tau 2}$ of multiplying a coefficient $g_2$ for delay #2 (q = 2) by a delay $\tau_2$ for coefficient #2 may be used to derive a precoder $d_{3,\,n}$ for subcarrier #n at delays #0 to #2.

In this manner, the coefficient g for the delay domain precoder may be transformed from the delay domain to the frequency domain by multiplying the coefficient g by the corresponding delay $\tau$. Adding the transformed coefficient may allow the coefficient d for the frequency domain to be obtained.

<CSI Reporting>

The UE may feed back one or more pieces of information about the entire CSI reporting band (wideband) (one or more pieces of wideband information) to the base station. Specifically, the UE may estimate a channel in a certain domain to determine the wideband information on the basis of the estimated channel (channel matrix).

For example, the UE may estimate the channel in the spatial and frequency domains to transform the estimated channel matrix to the transform domain. Alternatively, the UE may perform channel estimation in the transform domain.

Here, the transform domain may be, for example, a domain for a precoding scheme different from at least one of the time domain, the frequency domain, and the spatial domain. The transform domain may be, for example, any one or a combination of at least two of domains described below.

- Delay domain
- Delay-angular domain
- Delay-space domain

- Sparse domain
- Domain transformed or obtained from at least one of frequency domain and time domain
- Domain associated with at least one of frequency domain and time domain
- Domain related to at least one of delay and angle
- Domain having sparsity

<<Channel Estimation in Spatial and Frequency Domains>>

In a case that the channel estimation is performed in the space-frequency domain, the UE may transform the estimated channel (channel matrix) to the transform domain to feedback information about the transformed channel (channel matrix) (channel information) as the above-described wideband information to the base station.

Alternatively, the UE may calculate a precoder in the transform domain on the basis of the channel (channel matrix) estimated in the space-frequency domain to feedback information about the transform precoder (precoder information) as the above-described wideband information to the base station.

<<Channel Estimation in Transform Domain>>

In a case that the channel estimation is performed in the transform domain, the UE may feedback information about the estimated channel (channel matrix) (channel information) to the base station.

Alternatively, the UE may calculate a precoder in the transform domain on the basis of the channel (channel matrix) estimated in the transform domain to feedback information about the transform precoder (precoder information) as the above-described wideband information to the base station.

<<Determination on Precoder (Channel) Vector>>

The base station may multiply one or more pieces of wideband information (for example, the channel information or precoder information described above) to obtain (determine) a precoder vector (precoder vector) (or channel vector) for each subcarrier, each PRB, or a plurality of PRBs.

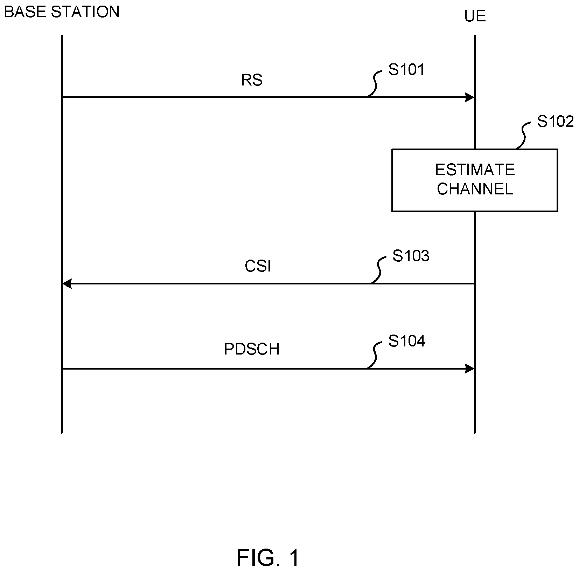

FIG. 1 is a diagram to show an example of an operation of the CSI reporting according to a first aspect. As shown in FIG. 1, in step S101, the base station transmits the RS. In step S102, the UE estimates a channel in a given domain (for example, the space-frequency domain, or the transform domain) on the basis of the RS from the base station.

The UE determines the channel information about the estimated channel (channel matrix) or the precoder information about the precoder determined on the basis of the estimated channel (channel matrix). Note that as describe above, in the case that the channel estimation is performed in the space-frequency domain, the channel information or the precoder information may be determined after the channel (channel matrix) estimated in the space-frequency domain is transformed to the transform domain.

In step S103, the UE transmits one or more pieces of wideband information (for example, one or more pieces of channel information, or one or more pieces of precoder information).

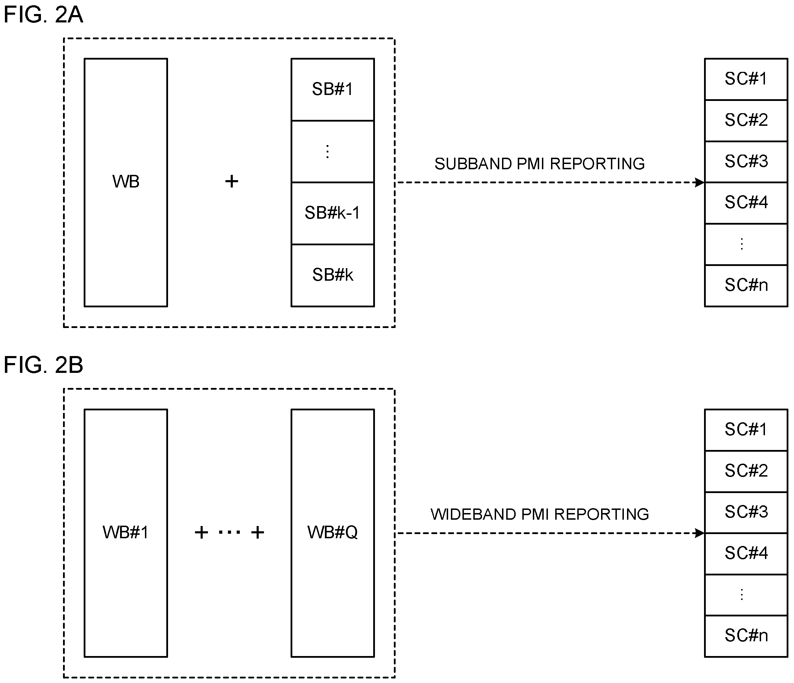

FIGS. 2A and 2B are diagrams to show examples of feedback of the wideband information according to the first aspect.

For example, as shown in FIG. 2A, the UE may feed back one piece of wideband information and information about subbands #1 to #k (k > 1) to the base station (which may be also referred to as subband PMI reporting or the like).

As shown in FIG. 2B, the UE may feed back a plurality pieces of wideband information #1 to #Q (1 < Q << k) to the base station (which may be also referred to as wideband PMI reporting or the like) .

In step S104 in FIG. 1, the base station may determine a precoding vector (or a channel vector) per subcarrier on the basis of the feedback information from the UE in step S103. The UE may transmit a downlink shared channel (for example, Physical Downlink Shared Channel) in the frequency domain and the spatial domain on the basis of the precoding vector (or the channel vector).

In this way, in the present embodiment, one pieces of wideband information and the information about each subband (for example, FIG. 2A) may be reported, or a plurality of pieces of wideband information (for example, FIG. 2B) may be reported on the basis of the report configuration information (for example, the RRC IE "CSI-ReportConfig"). The UE may determine whether one or a plurality of pieces wideband information is to be fed back on the basis of at least one of the report quantity information (for example, the RRC IE "reportQuantity") and the frequency domain information (for example, the RRC IE "pmi-FormatIndicator") .

<Definition of Delay Domain Precoder>

<<First Definition>>

In a first definition, the delay domain precoder may be introduced in place of a subband-based precoder. Specifically, in a certain frequency range (FR), the subband-based precoder may not be supported, but the delay domain precoder may be supported.

The FR in which the subband-based precoder is not supported but the delay domain precoder is supported may be, for example, at least one of 7.125 GHz to 24.25 GHz (also referred to as FR 3 or the like), 24.25 GHz to 52.6 GHz (also referred to as FR 2 or the like), and 52.6 GHz to 114.25 GHz (also referred to as FR 4 or the like). Note that the FR may be interpreted as a frequency band, a band, or the like.

The UE may receive configuration information about the delay domain precoder (delay domain precoder configuration information). The delay domain precoder configuration information may be supported in place of configuration information about the subband-based precoder (subband-based precoder configuration information, for example, a parameter for a subband in an RRC IE "reportFreqConfiguration").

<<Second Definition>>

In a second definition, the delay domain precoder may be introduced in addition to the subband-based precoder. Specifically, the subband-based precoder and the delay domain precoder may be supported in a certain FR.

The FR in which both the subband-based precoder and the delay domain precoder are supported may be, for example, at least one of 410 MHz to 7.125 GHz (also referred to as a FR 1 or the like) and 24.25 GHz to 52.6 GHz (also referred to as FR 2 or the like).

The UE may receive information indicating whether the subband-based precoder or the delay domain precoder is applied (applicability information, for example, an RRC IE "pmi-FormatIndicator"). The UE may receive at least one of the delay domain precoder configuration information and the subband-based precoder configuration information.

<CSI Parameter for Delay Domain Precoder>

In NR in Rel. 15, each CSI parameter may be calculated on the basis of a given rule. The rule may be based on dependency between the CSI parameters. For example, the LI may be calculated on the basis of the reported CQI, PMI, RI and CRI. The CQI may be calculated on the basis of the reported PMI, RI, and CRI. The PMI may be calculated on the basis of the reported RI and CRI. The RI may be calculated on the basis of the reported CRI.

In the first, the CSI may include a parameter for delay precoder. The parameter for the delay precoder may include, for example, at least one of those below.

- Information about the coefficient(s) g for Q delays (Q different delay values) (for example, $g \in C^{Q \times 1}$) (coefficient information)
- Information about the delays $\tau$ for the coefficient(s) g (for example, $\tau \in R^{Q \times 1}$), or information about the quantized delay $\tau$ (for example, $\tau \in N^{Q \times 1}$), where note that hereinafter, the information about the delays $\tau$ for the coefficient(s) g and the information about the quantized delay $\tau$ are collectively referred to as the delay information.

Here, the total number Q of delays may be notified to the UE through at least one of higher layer signaling (for example, RRC signaling) and physical layer signaling. For example, the delay domain precoder configuration information may include information indicating the total number Q of delays.

<<Delay Information>>

The delay information may be, for example, information indicating each delay $\tau$ (also referred to as a delay indicator (DI) or the like). A value of the q-th delay $\tau_q$ may be non-quantized or quantized.

In a case of being non-quantized, $\tau_q \in R$ and $\tau_q \geq 0$ may be satisfied, for example. Here, R may be a set of Q non-quantized delays $\tau$.

On the other hand, in a case of being quantized, $\tau_q = m \cdot T_{DP}$ may be satisfied, for example. Here, $m \in N$. N may be a set of Q quantized delays $\tau$. $T_{DP}$ may be units of quantization. For example, $T_{DP}$ may be a reciprocal of a bandwidth, specifically, 1/bandwidth. Note that the bandwidth may be the number of resource blocks constituting the bandwidth. The bandwidth in a wideband system is larger compared to the subband, and thus, $T_{DP}$ can be used to increase the granularity.

The DI fed back as the CSI may indicate an offset between the delay $\tau_q$ and an adjacent delay $\tau_{q+1}$ (or $\tau_{q-1}$),

a gap between the delay $\tau_q$ and the first delay $\tau_1$, or an amount of the delay $\tau_q$ itself. Note that the offset may be interpreted as a gap, an offset amount, a difference, or the like.

For example, in the case that the DI indicates an offset between the delay $\tau_q$ and the adjacent delay $\tau_{q+1}$ (or $\tau_{q-1}$), the offset $\Delta\tau$ may be expressed by Equation 7 below.

```
(Equation 7)
     Δτ = [Δτ₁, …, Δτ_Q ₋ ₁], where Δτ_q = τ_q ₊ ₁ - τ_q (for example, 1 ≤
q ≤ Q - 1)
```

In the case that the DI indicates an offset between the delay $\tau_q$ and the first delay $\tau_1$, the offset $\Delta\tau$ may be expressed by Equation 8 below.

```
(Equation 8)
     Δτ = [Δτ₁, …, Δτ_Q ₋ ₁], where Δτ_q = τ_q ₊ ₁ - τ₁ (for example, if 1
≤ q ≤ Q)
```

In the case that the DI indicates an amount of the delay $\tau_q$ itself, the delay $\tau$ may be expressed by Equation 9 below.

```
(Equation 9)
     τ = [τ₁, …, τ_Q],
```

(for example, if $1 \leq q \leq Q$)

Note that the above Equations 7 to 9 are merely examples, without limitation. For example, in Equations 7 to 9, a possible range of an index q of the delay $\tau$ may be $0 \leq q \leq Q - 2$ (or Q - 1). Equation 7 may be $\Delta\tau_q = \tau_q - \tau_{q-1}$, and in this case, $\tau_{q-1} = 0$ may be satisfied. Equation 8 may be $\Delta\tau_q = \tau_q - \tau_0$ (for example, if $0 \leq q \leq Q - 1$).

<<Coefficient Information>>

The coefficient information may be, for example, information indicating a matrix for a delay precoding (delay precoding matrix indicator (DMI)), or that reusing an existing precoding matrix indicator (PMI).

For example, the DMI may explicitly or implicitly indicate the delay domain precoder. The DMI is defined separately from the existing PMI. As such, the UE can report the CSI including the DMI to the base station without modifying the existing PMI.

On the other hand, the PMI in NR in Rel. 15 may explicitly or implicitly indicate the delay domain precoder. In this case, the existing signaling for the PMI can be reused.

The DMI or PMI (DMI/PMI) described above may be information explicitly indicating the coefficient g, or information indicating the coefficient g on codebook basis.

The DMI/PMI may indicate (1) an amplitude and phase of the quantized coefficient g, (2) the coefficient g quantized on the basis of a modulation order (or modulation scheme), or (3) the non-quantized coefficient g.

Alternatively, (4) one or more codebooks (for example, a plurality of codebooks having different sizes) may be defined. In this case, the DMI/PMI may indicate the coefficient g selected from among the corresponding codebook.

For example, assume that the coefficient g is expressed by Equation 10 below.

[Math. 4]

$$\text{(Equation 10)}$$

$$g = \begin{bmatrix} -0.7445 \\ -0.3364 - 0.5766i \end{bmatrix}$$

(1) Amplitude and Phase of Quantized Coefficient g

The amplitude of the coefficient g may be quantized on the basis of a given number n (for example, the number of bits). The quantization set may be defined as {1/2 ^ n, 2/2 ^ n, ..., 1} "0:1/ (2 ^ n - 1):1". "0:1/(2 ^ n - 1):1" may indicate a set containing 0, 1, and a plurality of fractions between 0 to 1 obtained by incrementing a numerator of 1/ (2 ^ n - 1) by one. For example, if n = 2, the quantization set may be {1/4, 1/2, 3/4, 1}. If n = 3, the quantization set may be {1/8, 2/8, 3/8, 4/8, 5/8, 6/8, 7/8, 1}.

The UE may select the closet value to the amplitude of the coefficient g from among quantization set. For example, if n = 3 as described above, the amplitude before and after being quantized may be expressed as below.

[Math. 5]

$$\text{before quantization:} \begin{bmatrix} 0.7445 \\ 0.6676 \end{bmatrix} \qquad \text{after quantization:} \begin{bmatrix} 6/8 \\ 5/8 \end{bmatrix}$$

The phase of the coefficient g may be quantized on the basis of a given number m (for example, the number of bits). The quantization set may be defined as {$-\pi$, $-\pi$ + 1/2 ^ m*2*$\pi$, ..., $-\pi$ + (2 ^m - 1)/2 ^ m*2*$\pi$}. For example, if m = 2, the quantization set may be {$-\pi$, $-\pi/2$. 0, $\pi/2$}.

The UE may select the closet value to the phase of the coefficient g from among the quantization set. For example, if m = 2 as described above, the phase before and after being quantized may be expressed as below.

[Math. 6]

$$\text{before quantization:} \begin{bmatrix} \pi \\ -2/3\pi \end{bmatrix} \qquad \text{after quantization:} \begin{bmatrix} -\pi \\ -1/2\pi \end{bmatrix}$$

Note that so long as $\pi$ is a specific value, for example, $-\pi$ in place of $-1/2\pi$ may be used for the quantization.

(2) Coefficient g Quantized on the basis of Modulation Order

The quantization set by use of the modulation order may be a constellation containing the n-th power of 2 values normalized by the largest amplitude on a constellation. Here, n may represent a given number (for example, each modulation order).

For example, if n = 2, Quadrature Phase Shift Keying (QPSK) may be used, and the quantization set may be {0.7071 + 0.7071i, 0.7071 - 0.7071i, -0.7071 + 0.7071i, -0.7071 - 0.7071i}.

If n = 3, 16 quadrature amplitude modulation (QAM) (for example, QAM normalized by √1.8) may be used, and the quantization set may be {0.2357 + 0.2357i, 0.2357 + 0.7071i, 0.7071 + 0.2357i, 0.7071 + 0.7071i, 0.2357 - 0.2357i, 0.2357 - 0.7071i, 0.7071 - 0.2357i, 0.7071 - 0.7071i, -0.2357 + 0.2357i, -0.2357 + 0.7071i, - 0.7071 + 0.2357i, -0.7071 + 0.7071i, -0.2357 - 0.2357i, -0.2357 - 0.7071i, -0.7071 - 0.2357i, -0.7071 - 0.7071i}.

The UE may select the closet value to the coefficient g from among the quantization set. For example, if n = 4 as described above, the coefficient g before and after being quantized may be expressed as below.

[Math. 7]

$$\text{before quantization:} \begin{bmatrix} -0.7445 \\ -0.3364 - 0.5766i \end{bmatrix}$$

$$\text{after quantization:} \begin{bmatrix} -0.7071 + 0.2357i \\ -0.2357 - 0.7071i \end{bmatrix}$$

Alternatively, the codebooks having different sizes may be defined. In this case, the DMI/PMI may indicate the coefficient g selected from among the corresponding codebook.

Note that the QAM may include not only 16QAM but also 64QAM, 256QAM and the like.

(3) Codebook

One or more codebooks (for example, a plurality of codebooks having different sizes) may be defined. As the codebook, a discrete Fourier transform (DFT) matrix having a certain size (for example, a size of the n-th power of 2 * the n-th power of 2) may be used. Here, n may represent a given number (for example, the number of feedback bits).

For example, if n = 1, one or more 2 × 1 matrices may be defined for the codebook (also referred to as a DFT codebook or the like). For example, the codebook may be expressed as below.

[Math. 8]

$$[1\ 1;\ 1\ -1]*1/\sqrt{2}$$

The UE may select a vector having a distance the closest to the coefficient g in the codebook. For example, if n = 1 as described above, a vector selected for the coefficient g from the codebook (see Equation 10 above) may be expressed as below. The coefficient g before and after being quantized may be expressed as below.

[Math. 9]

$$\begin{bmatrix} 1 \\ -1 \end{bmatrix}*1/\sqrt{2}$$

<Generation of Precoder in Frequency Domain>

As described above, in NR in Rel. 15, in the case that the subband PMI reporting is configured for the UE, the UE feeds back the wideband PMI and the subband PMI per subband to the base station. The base station may determine a matrix $W_1$ on the basis of the wideband PMI, and may determine a matrix $W_2$ per subband on the basis of the subband PMI per subband.

The UE may determine a precoder matrix W used for precoding of a downlink transmission (for example, PDSCH) on the basis of the matrices $W_1$ and $W_2$. For example, the precoder matrix may be calculated by Equation 11 below.

(Equation 11)

$$W = W_1 W_2$$

On the other hand, in a case that the UE feeds back each piece of wideband information (for example, at least one of the coefficient information and the delay information), how to define a precoder d is a problem.

In the first aspect, the precoder d in the frequency domain (which may be obtained from the codebook g) may be determined on the basis of the coefficient g determined on the basis of the coefficient information (for example, the DMI/PMI) and the delay $\tau$ determined on the basis of the delay information (for example, the DI). For example, the precoder d may be determined using Equation 12 below.

[Math. 10]

(Equation 12)

$$d = f(g, \tau) = \left[ \sum_{q=0}^{Q-1} g_q, \cdots, \sum_{q=0}^{Q-1} g_q e^{-j2\pi n \tau_q}, \cdots, \sum_{q=0}^{Q-1} g_q e^{-j2\pi(N-1)\tau_q} \right]^T \in \mathbb{C}^{N \times 1}$$

Here, Q represents the total number of delays, and q represents an index of a delay. N represent the total number of subcarriers, and n represents an index of a subcarrier.

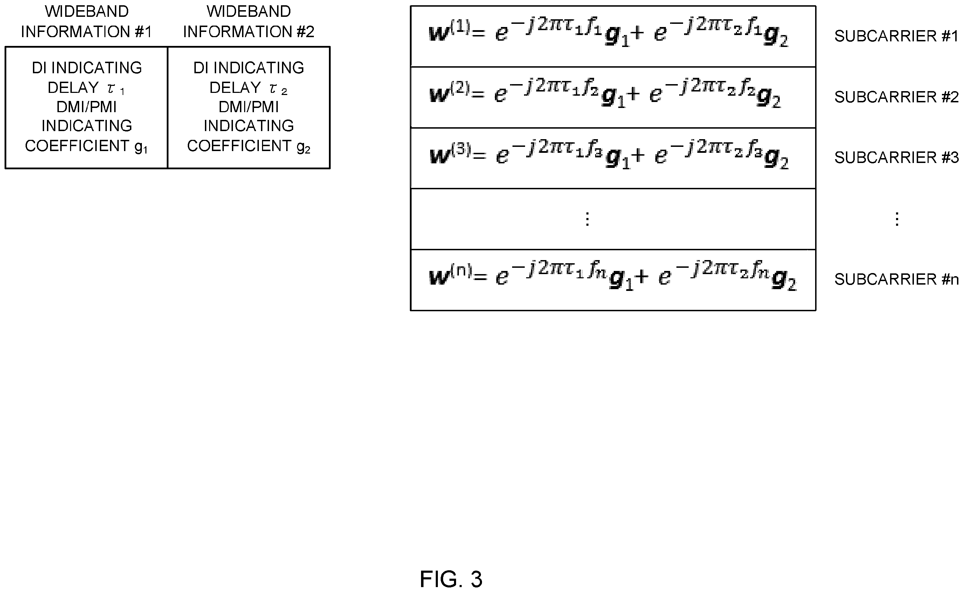

FIG. 3 is a diagram to show an example of the precoder based on the wideband information according to the first aspect. In FIG. 3, for example, a one-dimensional sparse transform domain precoder (1 dimension (1D)-sparse transform domain precoder) (space-delay domain precoder) may be used.

In FIG. 3, as described in FIG. 2B, assume that m pieces of wideband information (m > 1, where m = 2) are reported from the UE. Each piece of wideband information may include at least one of the delay information (for example, the DI) and the coefficient information (for example, the DMI/PMI).

For example, in FIG. 3, the total number Q of delays is Q = 2, and pieces of wideband information #1 and #2 are reported from the UE to the base station. Wideband information #1 may include the DI indicating the delay $\tau_1$ and the DMI/PMI indicating the coefficient $g_1$ for the delay $\tau_1$. Wideband information #2 may include the DI indicating the delay $\tau_2$ and the DMI/PMI indicating the coefficient $g_2$ for the delay $\tau_2$. Note that lengths (sizes) of $g_1$ and $g_2$ may be related to the number of antennas.

As shown in FIG. 3, a precoder $W^{(i)}$ for subcarrier #i ($1 \le i \le n$) if Q = 2 may be determined on the basis of at least one of the DI and DMI/PMI included in each of m pieces of wideband information.

For example, in FIG. 3, the precoder $W^{(i)}$ is determined on the basis of the delay $\tau_1$ indicated by the DI and the coefficient $g_1$ indicated by the DMI/PMI in wideband information #1, and the delay $\tau_2$ indicated by the DI and the coefficient $g_2$ indicated by the DMI/PMI in wideband information #2.

Note that in FIG. 3, index #i of a subcarrier is in a range $1 \le i \le n$, but may be in a range $0 \le i \le n - 1$ without limitation.

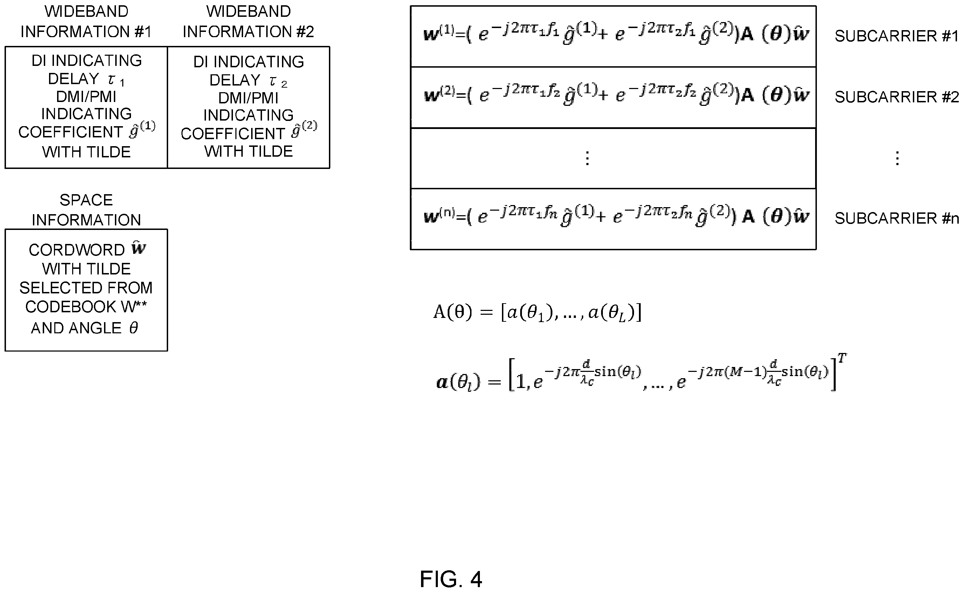

FIG. 4 is a diagram to show another example of the precoder based on the wideband information according to the first aspect. In FIG. 4, for example, a two-dimensional sparse transform domain precoder (2 dimension (2D)-sparse transform domain precoder (TDP), angular-delay domain precoder) may be used. In FIG. 4, the angular domain and delay domain precoders may be jointed.

In FIG. 4, assume that information about the space (spatial information), in addition to m pieces of wideband information (m > 1, where m = 2), is reported from the UE. Each piece of wideband information may include at least one of the delay information (for example, the DI) and the coefficient information (for example, the DMI/PMI).

The spatial information may include information about at least one of a cordword w with tilde ("~" is added over w) selected from a codebook W** and an angle θ. Note that a size of the codebook W** may be related to channel correlation.

As shown in FIG. 4, the precoder $W^{(i)}$ for subcarrier #i ($1 \le i \le n$) if Q = 2 may be determined on the basis of at least one of the DI and DMI/PMI included in each of m pieces of wideband information, and the angle θ and cordword w with tilde determined by the spatial information.

For example, in FIG. 4, the precoder $W^{(i)}$ is determined on the basis of the delay $\tau_1$ indicated by the DI and a coefficient $g^{(1)}$ with tilde indicated by the DMI/PMI in wideband information #1, the delay $\tau_2$ indicated by the DI and the coefficient $g^{(2)}$ with tilde indicated by the DMI/PMI in wideband information #2, and the angle θ and cordword w with tilde determined by the spatial information. Note that in FIG. 4, index i of a subcarrier is in a range $1 \le i \le n$, but may be in a range $0 \le i \le n - 1$ without limitation.

Here, A(θ) used for the determination on the precoder $W^{(i)}$ for subcarrier #i ($1 \le i \le n$) in FIG. 4 may be defined by Equation 13 and Equation 14 below.

[Math. 11]

(Equation 13)

$$A(\theta) = [a(\theta_1), \dots, a(\theta_L)]$$

(Equation 14)

$$a(\theta_l) = \left[1, e^{-j2\pi\frac{d}{\lambda_c}\sin(\theta_l)}, \ldots, e^{-j2\pi(M-1)\frac{d}{\lambda_c}\sin(\theta_l)}\right]^T$$

Here, M represent the number of antennas or radio frequency (RF) chains. L (= Q) represents lengths of vectors $g_m$ and $\theta_m$. $g_{m1}$ and $\theta_{m1}$ represent the 1-th ($1 \leq 1 \leq L$) elements of the vectors $g_m$ and $\theta_m$, respectively. d represents an antenna space. $\lambda_c$ represents a wavelength.

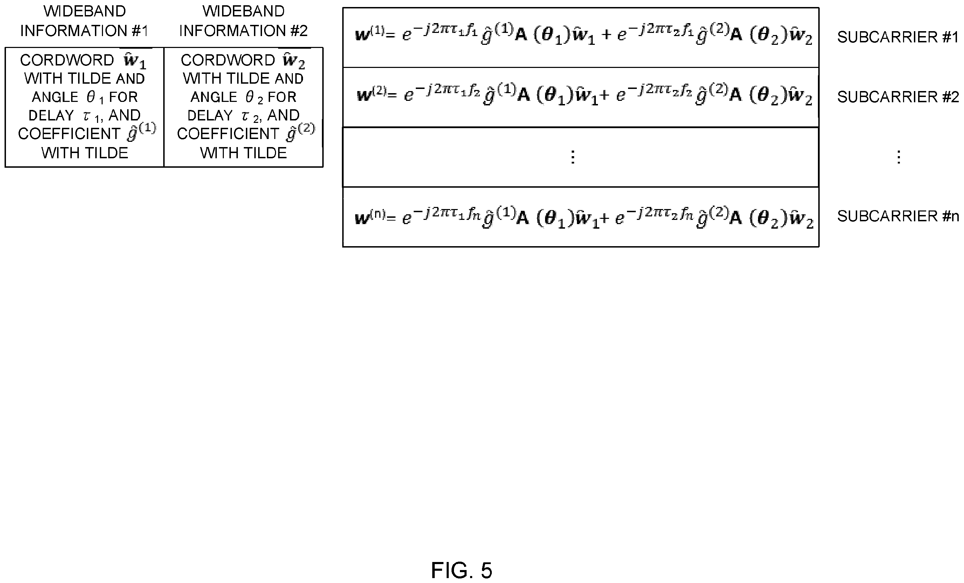

FIG. 5 is a diagram to show still another example of the precoder based on the wideband information according to the first aspect. In FIG. 5, the angular domain and delay domain precoders are separated, which may be different from FIG. 4. In FIG. 5, the cordword and the angle $\theta$ are not common for the delay $\tau_q$, and the cordword and the angle $\theta$ are reported per delay $\tau_q$ (in other words, per wideband information piece), which may be different from FIG. 4. In the following, differences from in FIG. 4 will be mainly described.

In FIG. 5, assume that m pieces of wideband information (m > 1, where m = 2) are reported from the UE. Each piece of wideband information may include at least one of information about the cordword (cordword information) and information about the angle $\theta$ (angle information) for the delay $\tau$, in addition to the delay information (for example, the DI) and the coefficient information (for example, the DMI/PMI).

As shown in FIG. 5, the precoder $W^{(i)}$ for subcarrier #i ($1 \leq i \leq n$) if L = 2 may be determined on the basis of at least one of the DI and DMI/PMI included in each of m pieces of wideband information, and the angle $\theta$ determined on the basis of the angle information and cordword determined on the basis of the cordword information.

For example, in FIG. 5, the precoder $W^{(i)}$ is determined on the basis of the delay $\tau_1$ indicated by the DI, the coefficient $g_1$ indicated by the DMI/PMI, and an angle $\theta_1$ and a cordword w with tilde in wideband information #1, and the delay $\tau_2$ indicated by the DI, the coefficient $g_2$ indicated by the DMI/PMI, and an angle $\theta_2$ and a cordword in wideband information #2.

Note that each of $A(\theta_1)$ and $A(\theta_2)$ in FIG. 5 may be defined similar to Equation 12 and Equation 13. In FIG. 5, index i of a subcarrier is in a range $1 \leq i \leq n$, but may be in a range $0 \leq i \leq n - 1$ without limitation.

As described above, the UE feeds back each piece of wideband information including at least one of the delay information and the coefficient information. The base station determines a precoder per subcarrier on the basis of each piece of wideband information. This can prevent the reliability of the CSI from degrading while decreasing the UL overhead even if the wideband of which the CSI is to be reported is broadened.

(CSI Configuration)

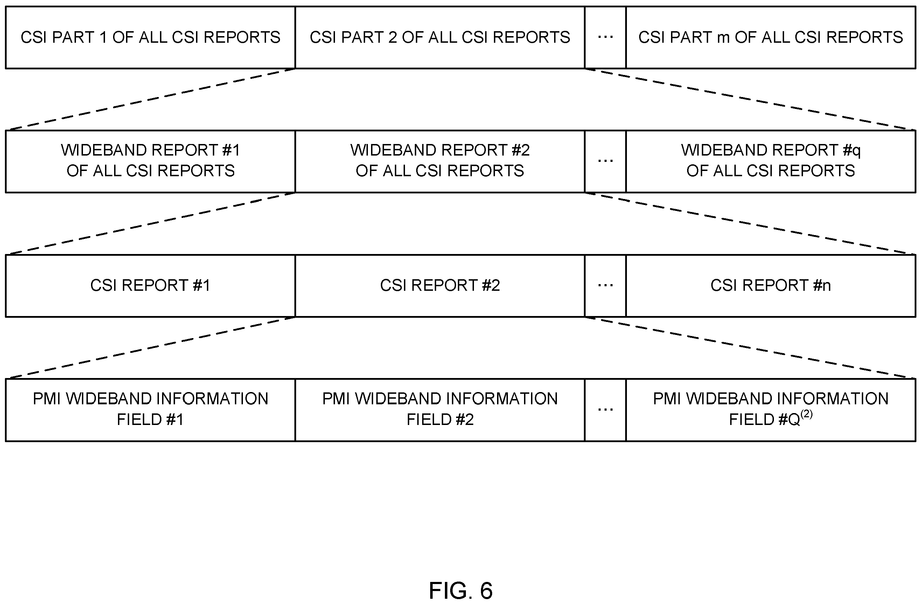

FIG. 6 is a diagram to show an example of a configuration of the CSI report in the UCI. Here, the number of CSI reports may be n. The number of CSI parts in one CSI report may be m. The number of wideband PMI feedbacks (for example, PMI wideband information fields) in the CSI part 1 (in the CSI report not including more than one CSI part, or in the CSI part 1 in more than one CSI parts) may be $Q_0$. The number of wideband PMI feedbacks in other than the CSI part 1 may be Q. The number of wideband PMI feedbacks in a CSI part m may be $Q^{(m)}$. The number of wideband reports in one CSI part may be q. The number of wideband PMI feedbacks in a wideband report q may be $Q^{(q)}$. Q wideband PMI feedbacks may be divided for q wideband reports. The numbers of wideband PMI feedbacks included in wideband report #1, #2, ..., #q may be $Q^{(1)}$, $Q^{(2)}$, ..., $Q^{(q)}$, respectively.

In the present disclosure, CSI report #n in the CSI part m and the CSI part m of CSI report #n may be interchangeably interpreted.

In the present disclosure, wideband PMI, wideband PMI information, PMI wideband information, PMI wideband information field, and wideband PMI feedback may be interchangeably interpreted. In the present disclosure, DI, wideband DI, wideband DI information, DI wideband information, DI wideband information field, and wideband DI feedback may be interchangeably interpreted.

The feedback to the 2D sparse TDP described above may be a set of ($\tau$ and g with tilde), a set of ($\theta$, w with tilde), or combinations of those. Here, the delay domain is a transform domain (transformed domain) of the frequency domain, and the angular domain is a transform domain (transformed domain) of the spatial domain.

$\tau$ represents a delay, and g with tilde represent a coefficient at a corresponding delay. $\theta$ represents an angle, and w with tilde represents a coefficient at a corresponding angle.

In the following embodiments, an example using feedback in the delay domain will be described. In other words, effects of both ($\theta$, w with tilde) and g with tilde are merged by g so that the UE feeds back ($\tau$, g). g represents coefficient for all antennas or angles at the corresponding delay.

For example, two delays and two angles may be used in the 2D sparse TDP used to firstly calculate ($\tau_1$, $g_1$ with tilde), ($\tau_2$, $g_2$ with tilde) , ($\theta_1$, $w_1$ with tilde), and ($\theta_2$, $w_2$ with tilde) . The UE may use these values to calculate $g_1$ and $g_2$ by Equation 15 below. [Math. 12]

(Equation 15)

$$g_1 = \widetilde{g_1} * (a(\theta_1) * \widetilde{w_1} + a(\theta_2) * \widetilde{w_2})$$

$$g_2 = \widetilde{g_2} * (a(\theta_1) * \widetilde{w_1} + a(\theta_2) * \widetilde{w_2})$$

This allows the UE to feed back two of ($\tau_1$, $g_1$) and ($\tau_2$, $g_2$) . Each of $g_1$ and $g_2$ may correspond to the PMI wideband information field (wideband PMI information). Each of $\tau_1$ and $\tau_2$ may correspond to delay index (delay index (DI) or delay indicator) wideband information field (wideband DI information).

The UE may report ($\tau$, g with tilde) and ($\theta$, w with tilde). In this case, in a rule in each of the following embodiments, ($\tau$ (DI), g (PMI)) may be interpreted as ($\tau$, g with tilde) or ($\theta$, w with tilde) .

In the CSI report shown in the drawings describe below, some fields may be omitted, or other some fields may be added to the CSI report. In the CSI report shown in the drawings describe below, types and orders of fields are not limited to examples in the drawings.

<Embodiment 1> One CSI Part

In this embodiment, CSI bit generation in the UCI not including more than one CSI part may be defined for one or a plurality of wideband PMI feedbacks describing a case that one CSI report includes one CSI part.

<<Embodiment 1-1>> CSI Field

A plurality of CSI fields in one CSI report may include $Q_0$ wideband PMI feedbacks (for example, PMI wideband information fields). The CSI fields in one CSI report may further include delay indices (DIs, for example, DI wideband information fields) corresponding to the respective $Q_0$ wideband PMI feedbacks if reported.

[Embodiment 1-1-1]

$Q_0$ = 1 may be satisfied. Specifically, the plurality of CSI fields in one CSI report may include one wideband PMI feedback. The CSI fields in one CSI report may further include, if reported, the DI.

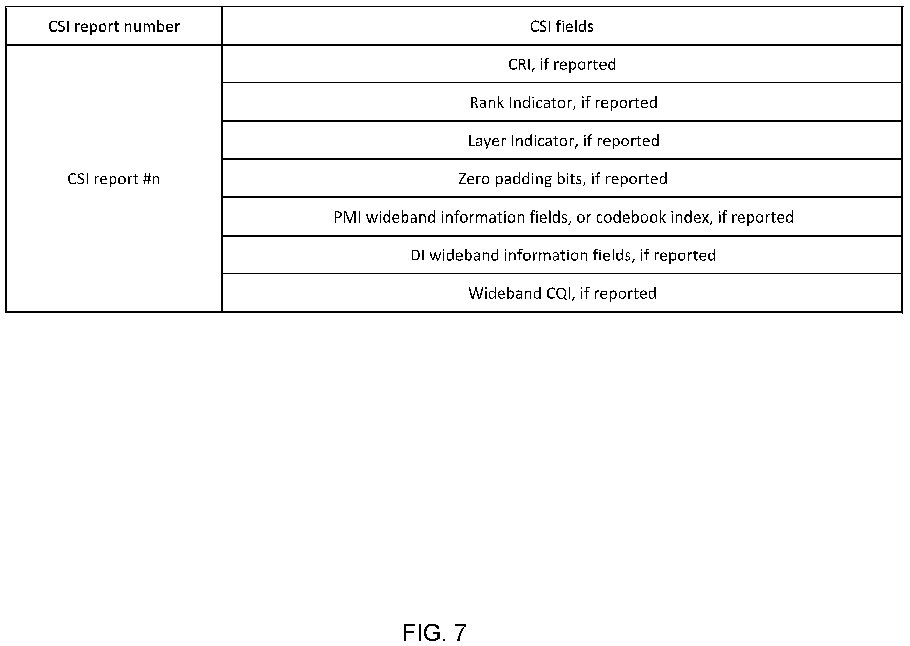

For example, as shown in FIG. 7, CSI report #n may include the wideband PMI feedback or the codebook index if reported, and the corresponding DI if reported.

[Embodiment 1-1-2]

$Q_0$ >= 1 may be satisfied. Specifically, the plurality of CSI fields in one CSI report may include a plurality of wideband PMI feedbacks. The CSI fields in one CSI report may further include the DI, if reported.

[[Embodiment 1-1-2-1]]

A value of $Q_0$ may be configured or indicated by a higher layer parameter (for example, at least one of the RRC and the MAC CE) or a physical layer parameter (for example, the DCI).

[[Embodiment 1-1-2-2]]

The value of $Q_0$ may be determined by the UE, and reported in the UCI or other to the base station.

[[Embodiment 1-1-2-3]]

A maximum value of $Q_0$ may be configured or indicated by a higher layer parameter (for example, at least one of the RRC and the MAC CE) or a physical layer parameter (for example, the DCI). The value of $Q_0$ may be determined

by the UE, and reported in the UCI or other to the base station. The value of $Q_0$ may be less than the configured maximum value.

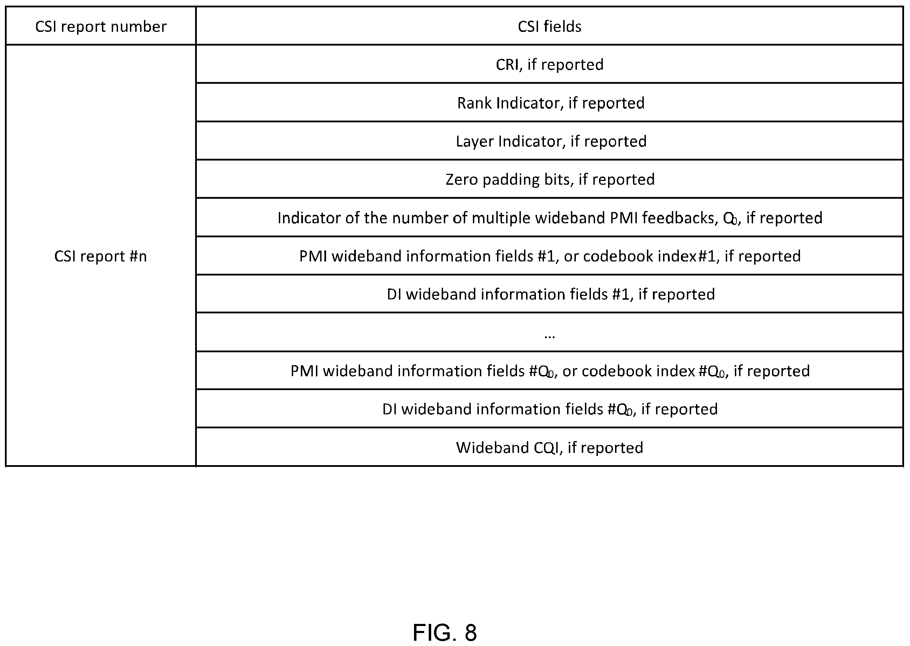

For example, as shown in FIG. 8, CSI report #n may include $Q_0$ sets of a plurality of wideband PMI feedbacks or the codebook indices if reported, and the corresponding DIs if reported. In Embodiment 1-1-2-1, CSI report #n may not include a value of $Q_0$. In Embodiment 1-1-2-2 and Embodiment 1-1-2-3, CSI report #n may include a value of $Q_0$.

The DI may be reported together with the PMI except for two cases described below.

Case 1: the DI for the first PMI is assumed to be always 0, and is not necessary to be reported.

Case 2: if the CSI reporting configuration does not include the DI, the DI is not reported by the UE.

<<Embodiment 1-2>> UCI Bit Sequence Generation

If no CSI report includes more than one part, CSI fields of all CSI reports may be mapped to a UCI bit sequence starting from $a_0$, i.e., $a_0$, $a_1$, ..., $a_{A-1}$. If not, the UCI bit sequence may be generated in accordance with Embodiment 2 or Embodiment 3 described later.

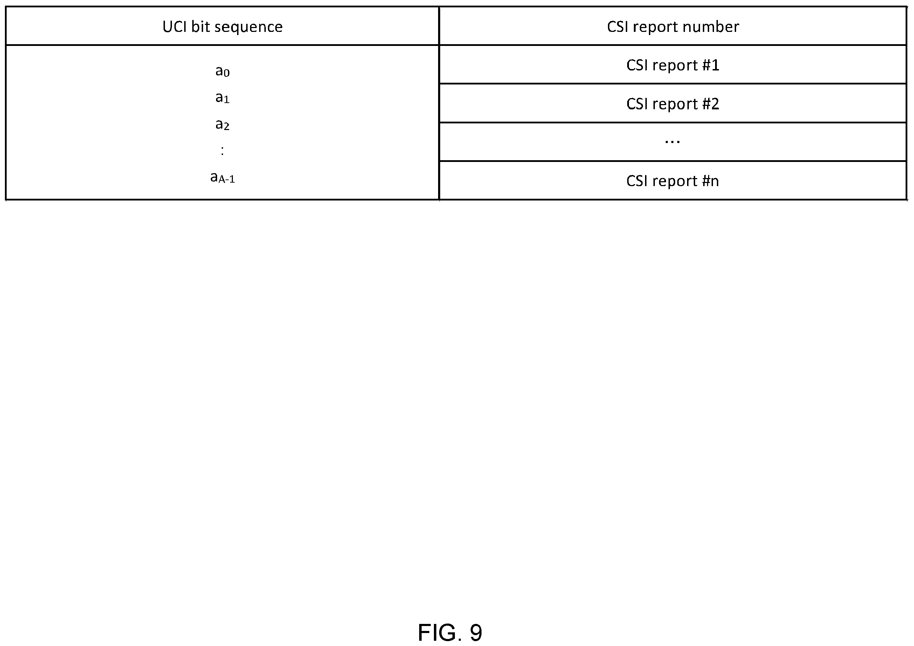

For example, as shown in FIG. 9, in CSI reporting with no CSI report including more than one part, the respective CSI fields of all CSI reports #1, #2, ..., #n in ascending order of CSI reporting priority (priority value, priority order) may be mapped to the UCI bit sequence $a_0$, $a_1$, ..., $a_{A-1}$. Here, the CSI fields of CSI report #n may be those of the example shown in FIG. 7 or FIG. 8 described above. A = n may be satisfied.

At least one of code block segmentation, channel coding, and rate matching in NR in Rel. 15 or those existing may be applied to the UCI bit sequence generated in Embodiment 1-2.

According to the present embodiment, in the case that one CSI report includes one CSI part, the wideband PMI can be appropriately reported.

<Embodiment 2> Two CSI Parts

In this embodiment, a case that one CSI report includes two CSI parts will be described.

For a plurality of wideband PMI feedbacks, the CSI bit generation in the UCI including a two-part CSI report may be defined.

Compatibility to NR in Rel. 15 can be maintained.

<<Embodiment 2-1>> CSI Fields in CSI Part 1

A plurality of CSI fields of one CSI report in the CSI part 1 may include at least one of an indicator of the number of a plurality of wideband PMI feedbacks in the CSI part 2, Q, if reported, and $Q_0$ wideband PMI feedbacks (for example, PMI wideband information fields) if reported. The CSI fields of one CSI report in the CSI part 1 may further include the DIs corresponding to the respective $Q_0$ wideband PMI feedbacks (for example, DI wideband information fields) if reported.

[Embodiment 2-1-1]

To the plurality of CSI fields of one CSI report in the CSI part 1, only the indicator of the number of the plurality of wideband PMI feedbacks in the CSI part 2 may be added, if reported.

The CSI bit generation in the UCI defined in Embodiment 1 may be used for one wideband PMI feedback. In Embodiment 2, a plurality of wideband PMI feedbacks only may be considered.

[Embodiment 2-1-2]

The plurality of CSI fields of one CSI report in the CSI part 1 may include at least one of one wideband PMI feedback if reported, and the indicator of the number of a plurality of wideband PMI feedbacks in the CSI part 2 if reported. The plurality of CSI fields of one CSI report in the CSI part 1 may further include the DI, if reported.

The CSI part 1 includes one wideband PMI feedback, and thus, performance degradation can be suppressed even in a case that the CSI part 2 is dropped.

[Embodiment 2-1-2]

The plurality of CSI fields of one CSI report in the CSI part 1 may include at least one of $Q_0$ wideband PMI feedbacks if reported, and the indicator of the number of a plurality of wideband PMI feedbacks in the CSI part 2 if reported. The plurality of CSI fields of one CSI report in the CSI part 1 may further include the DI, if reported.

Embodiment 1-1-2 may be applied to configuration or definition of $Q_0$.

Flexibility of the wideband PMI feedback can be increased.

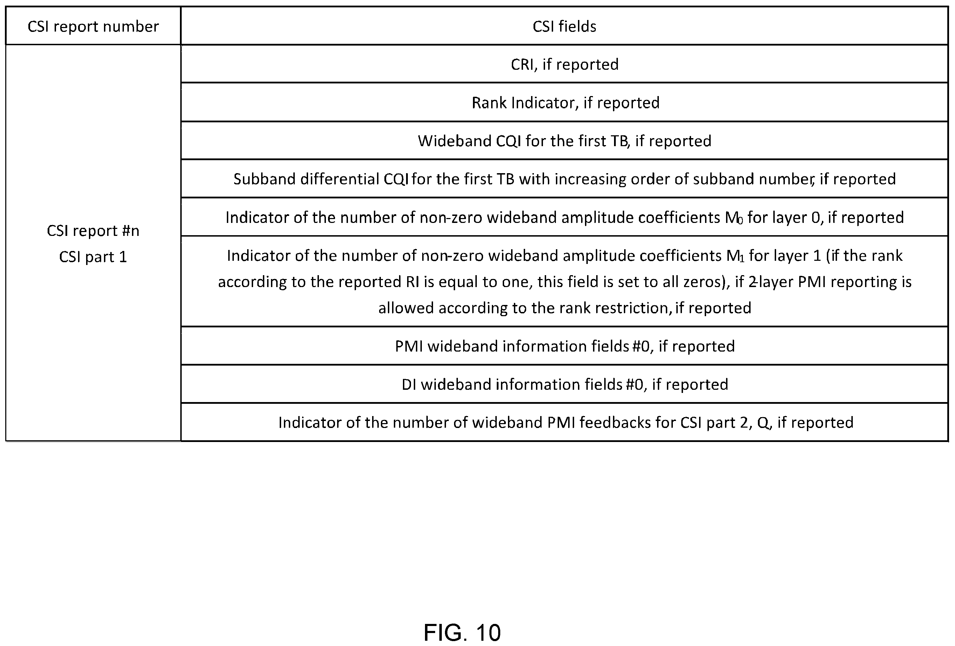

For example, as shown in FIG. 10, the CSI part 1 of CSI report #n may include $Q_0$ sets of the wideband PMI feedbacks or the codebook indices if reported, and the DIs if reported, and the indicator of the number of a plurality of wideband PMI feedbacks in the CSI part 2, Q, if reported.

<<Embodiment 2-2>> CSI Fields in CSI Part 2

The plurality of CSI fields of one CSI report in the CSI part 2 may include one or a plurality of wideband reports.

[Embodiment 2-2-1]

The CSI part 2 of one CSI report may include one wideband report including Q wideband PMI feedbacks (for example, PMI wideband information fields) if reported. The wideband report may further include the DIs corresponding to the respective Q wideband PMI feedbacks (for example, DI wideband information fields) if reported.

[[Embodiment 2-2-1-1]]

A value of Q may be configured or indicated by at least one of the RRC, the MAC CE, and the DCI, or may be determined by UE and displayed (reported) by the indicator of the number of wideband PMI feedbacks in the CSI part 1, Q, as in Embodiment 2-1.

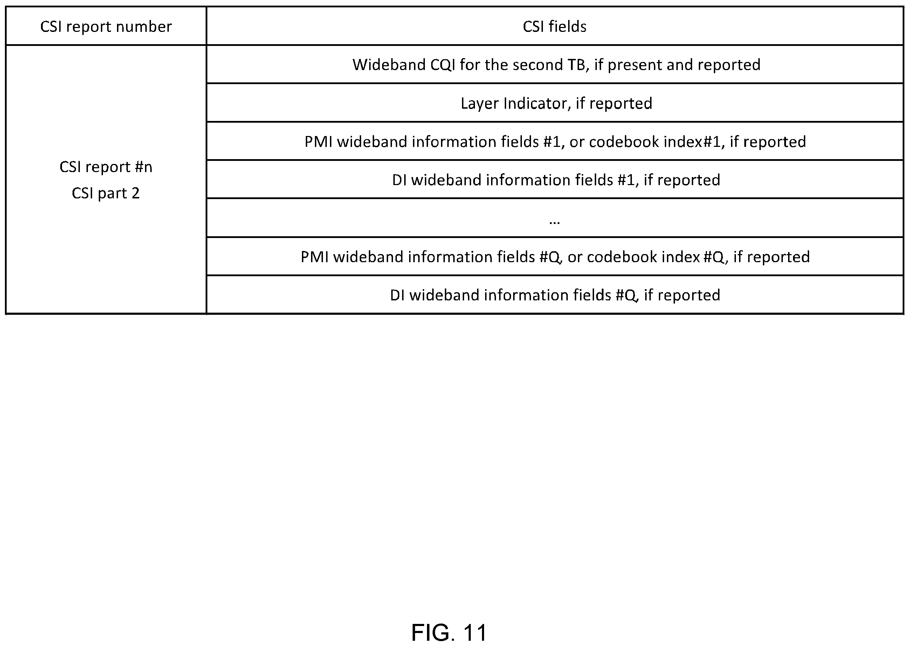

For example, as shown in FIG. 11, the CSI part 2 of CSI report #n may include Q sets of the wideband PMI feedbacks if reported and the DIs if reported, and the indicator of the number of a plurality of wideband PMI feedbacks in the CSI part 2 if reported.

[[Embodiment 2-2-1-2]]

If at least one CSI report is a two-part, two UCI bit sequences $a^{(1)}_0$, $a^{(1)}_1$, ..., $a^{(1)}_{A(1)-1}$ (length of $A^{(1)}$) and $a^{(2)}_0$, $a^{(2)}_1$, ..., $a^{(2)}_{A(2)-1}$ (length of $A^{(2)}$) may be generated.

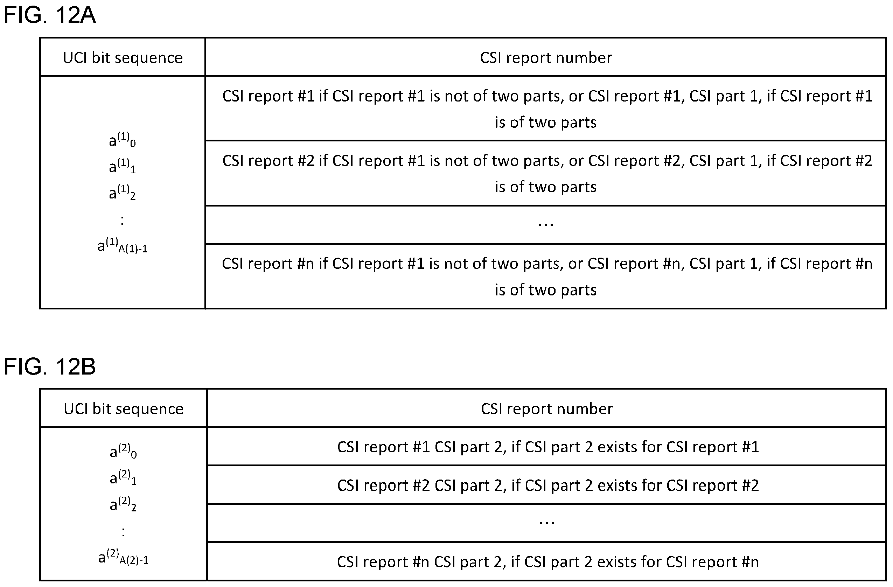

For the CSI part 1, the plurality of CSI fields of the all CSI reports #1, #2, ..., #n may be mapped to $a^{(1)}_0$, $a^{(1)}_1$, ..., $a^{(1)}_{A(1)-1}$ in an order from top to bottom in FIG. 12A. Here, the CSI fields of CSI report #n may be those of the example shown in FIG. 7, 8, or 10 described above. $A^{(1)} = n$ may be satisfied. For the CSI part 2, the plurality of CSI fields of the all CSI reports #1, #2, ..., #n may be mapped to $a^{(2)}_0$, $a^{(2)}_1$, ..., $a^{(2)}A_{(2)-1}$ in an order from top to bottom in FIG. 12B. Here, the CSI fields of CSI report #n may be those of the example shown in FIG. 11 described above. $A^{(2)} = n$ may be satisfied.

The plurality of CSI fields in the CSI part 1 may correspond to CSI report #n if CSI report #n is not a two-part, or may correspond to the CSI part 1 in CSI report #n if CSI report #n is a two-part. The plurality of CSI fields in the CSI part 2 may correspond to the CSI part 1 of CSI report #n.

[[Embodiment 2-2-1-3]]

The UCI bit sequence for the CSI part 1 and the UCI bit sequence for the CSI part 2 may be separately coded. In a case that an actual coding rate is higher than the maximum coding rate, the CSI part 2 may be firstly dropped, and then, the CSI part 1 may be dropped, until the coding rate satisfies requirements of the maximum coding rate.

At least one of code block segmentation, channel coding, and rate matching in NR in Rel. 15 or those existing may be applied to two UCI bit sequences generated in Embodiment 2-2-1-2.

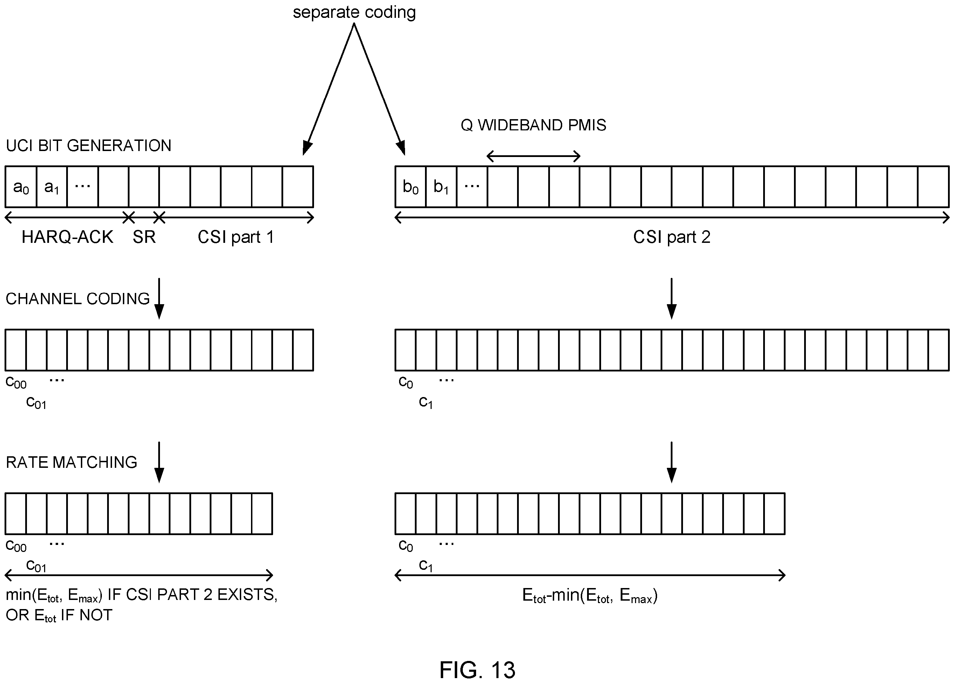

As shown in FIG. 13, the CSI part 1 and the CSI part 2 may be separately coded. The CSI part 2 includes the wideband report of a plurality of CSI reports. The wideband report of one CSI report includes Q wideband PMIs.

If an actual coding rate exceeds a desired value, the UE may firstly drop the CSI part 2, and then, drop the CSI part 1.

In using a rate-matched output sequence length $E_{tot}$ and the maximum coding bit length $E_{max}$ with respect to a coding rate not exceeding the maximum PUCCH coding rate, an output sequence length obtained by adding the HARQ-ACK, the SR and the CSI part 1 in the case of using the two-part CSI may be $min(E_{tot}, E_{max})$. The output sequence length on the basis of the CSI part 2 may be $E_{tot} - min(E_{tot}, E_{max})$.

According to Embodiment 2-2-1, complexity can be suppressed.

[Embodiment 2-2-2]

The CSI part 2 of one CSI report may include two wideband reports. Two wideband reports may respectively

include $Q^{(1)}$ wideband PMI feedbacks (for example, PMI wideband information fields) and $Q^{(2)}$ wideband PMI feedbacks. The CSI part 2 of one CSI report may further include the DIs (for example, DI wideband information fields) if reported.

[[Embodiment 2-2-2-1]]

Values of $Q^{(1)}$ and $Q^{(2)}$ may be configured or indicated by at least one of the RRC, the MAC CE, and the DCI, may be determined by UE and displayed (reported) by the indicator of the number of wideband PMI feedbacks in the CSI part 1, or may be obtained by combing those.

[[[Option 1]]]

$Q^{(1)}$ and $Q^{(2)}$ may be directly configured or indicated.

[[[Option 2]]]

$Q$ and $Q^{(1)}$ may be configured or indicated. $Q^{(2)}$ may be obtained as $Q - Q^{(1)}$.

[[[Option 3]]]

$Q$ may be configured or indicated. $Q^{(1)}$ may be obtained as floor $(Q/2)$. $Q^{(2)}$ may be obtained as $Q - Q^{(1)}$.

[[[Option 4]]]

$Q$ and $\Delta Q$ may be configured or indicated. $Q^{(1)}$ and $Q^{(2)}$ may be obtained by a function of $Q$ and $\Delta Q$. For example, $Q^{(1)}$ and $Q^{(2)}$ may be obtained by $Q^{(1)} = $ floor $((Q - \Delta Q)/2)$ and $Q^{(2)} = Q - Q^{(1)}$, or may be obtained by $Q^{(1)} = $ floor $(Q/2) - \Delta Q$, $Q^{(2)} = Q - Q^{(1)}$.

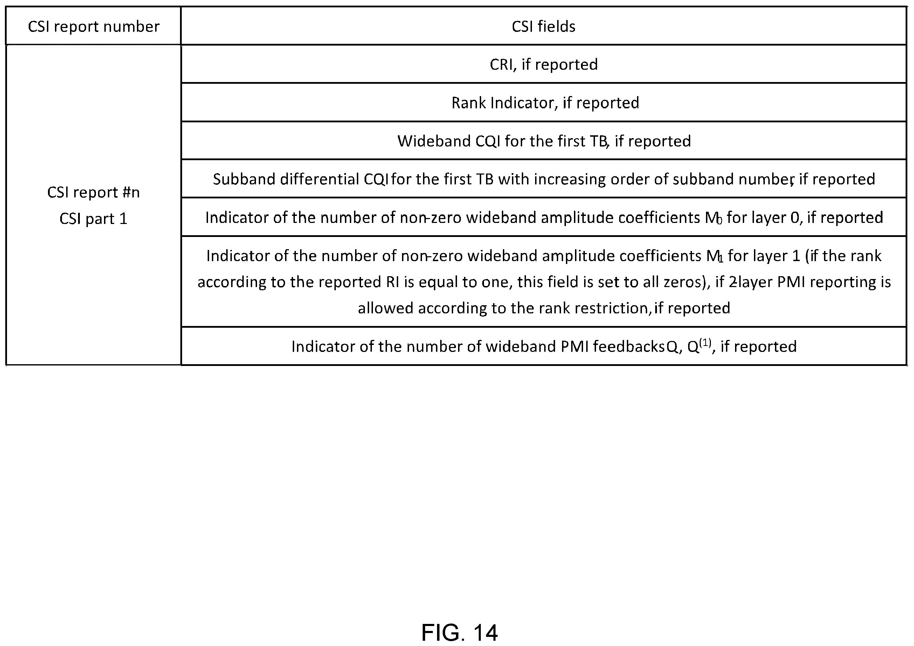

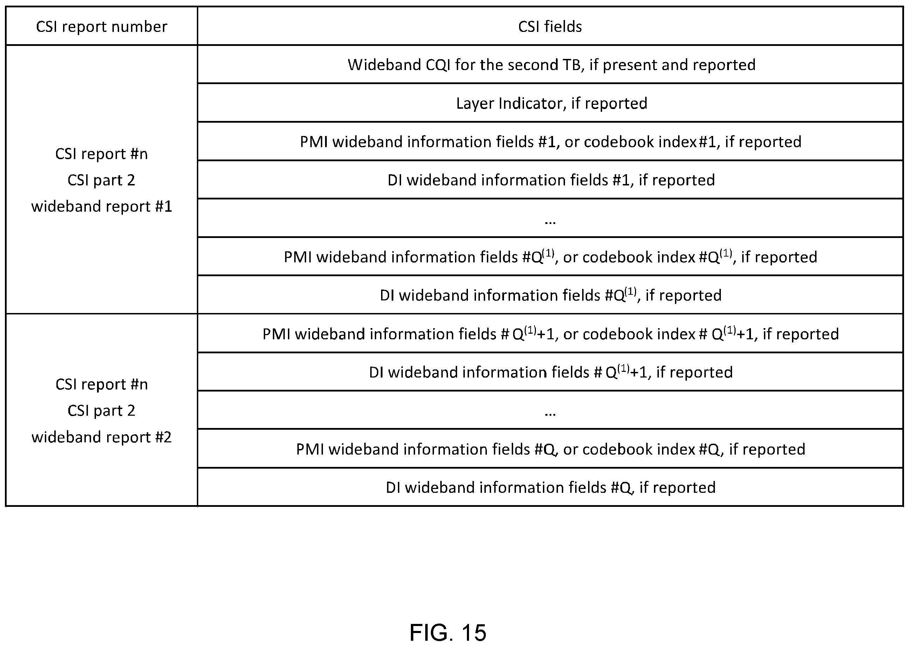

For example, in a case that Option 2 is applied, as shown in FIG. 14, the CSI part 1 of CSI report #n may include indicators of the numbers of a plurality of wideband PMI feedbacks in the CSI part 2, $Q$ and $Q^{(1)}$, if reported. As shown in FIG. 15, the CSI part 2 of CSI report #n may include wideband reports #1 and #2. Wideband report #1 may include $Q^{(1)}$ sets of the wideband PMI feedbacks or the codebook indices if reported, and the DIs if reported. Wideband report #2 may include $Q^{(2)}$ $(Q - Q^{(1)})$ sets of the wideband PMI feedbacks or the codebook indices if reported, and the DIs if reported.

[[Embodiment 2-2-2-2]]

If at least one CSI report is a two-part, two UCI bit sequences $a^{(1)}_0$, $a^{(1)}_1$, ..., $a^{(1)}_{A(1)-1}$ (length of $A^{(1)}$) and $a^{(2)}_0$, $a^{(2)}_1$, ..., $a^{(2)}_{A(2)-1}$ (length of $A^{(2)}$) may be generated.

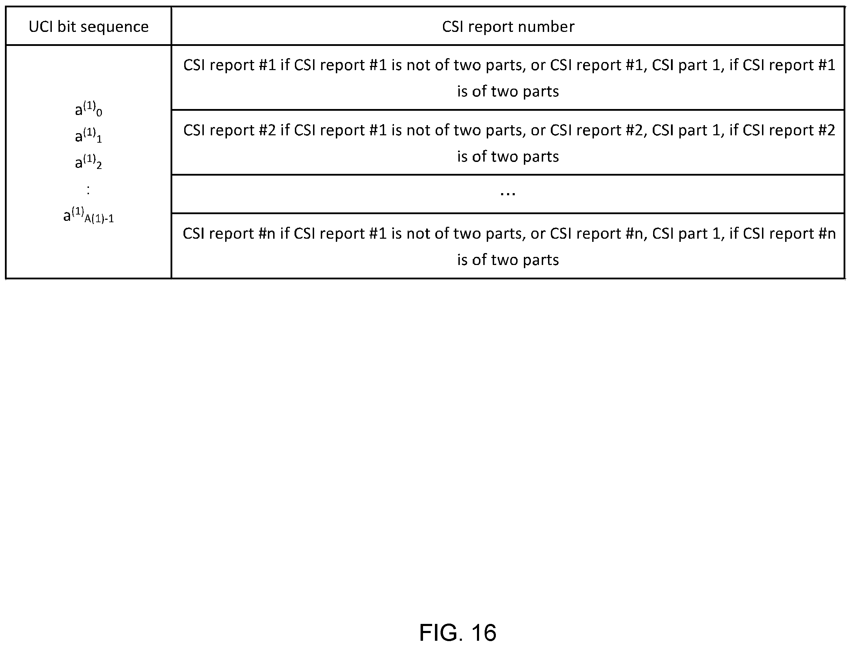

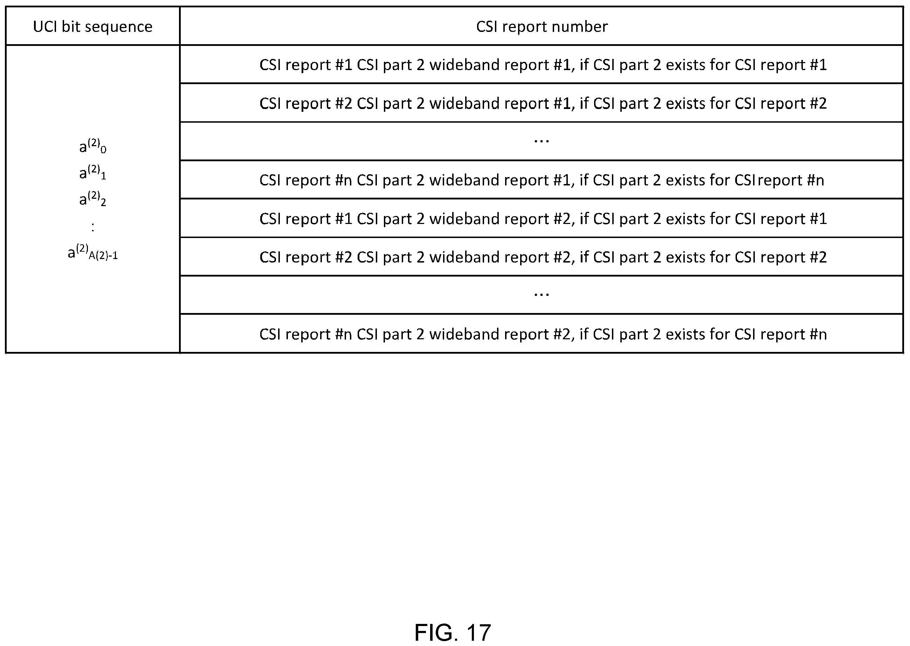

For the CSI part 1, the plurality of CSI fields of the all CSI reports #1, #2, ..., #n may be mapped to $a^{(1)}_0$, $a^{(1)}_1$, ..., $a^{(1)}_{A(1)-1}$ in an order from top to bottom in FIG. 16. Here, the CSI fields of CSI report #n may be those of the example shown in FIG. 7, 8, or 14 described above. $A^{(1)} = n$ may be satisfied. For the CSI part 2, the plurality of CSI fields of the all CSI reports #1, #2, ..., #n may be mapped to $a^{(2)}_0$, $a^{(2)}_1$, ..., $a^{(2)}_{A(2)-1}$ in an order from top to bottom in FIG. 17. Here, the CSI fields of CSI report #n may be those of the example shown in FIG. 15 described above. $A^{(2)} = n$ may be satisfied.

The plurality of CSI fields in the CSI part 1 may correspond to CSI report #n if CSI report #n is not a two-part, or may correspond to the CSI part 1 in CSI report #n if CSI report #n is a two-part. The plurality of CSI fields in the CSI part 2 may correspond to the CSI part 1 of CSI report #n.

[[Embodiment 2-2-2-3]]

The UCI bit sequence for the CSI part 1 and the UCI bit sequence for the CSI part 2 may be separately coded. In a case that an actual coding rate is higher than the maximum coding rate, the CSI part 2 may be firstly dropped, and then, the CSI part 1 may be dropped, until the coding rate satisfies requirements of the maximum coding rate.

At least one of code block segmentation, channel coding, and rate matching in NR in Rel. 15 or those existing may be applied to two UCI bit sequences generated in Embodiment 2-2-2-2.

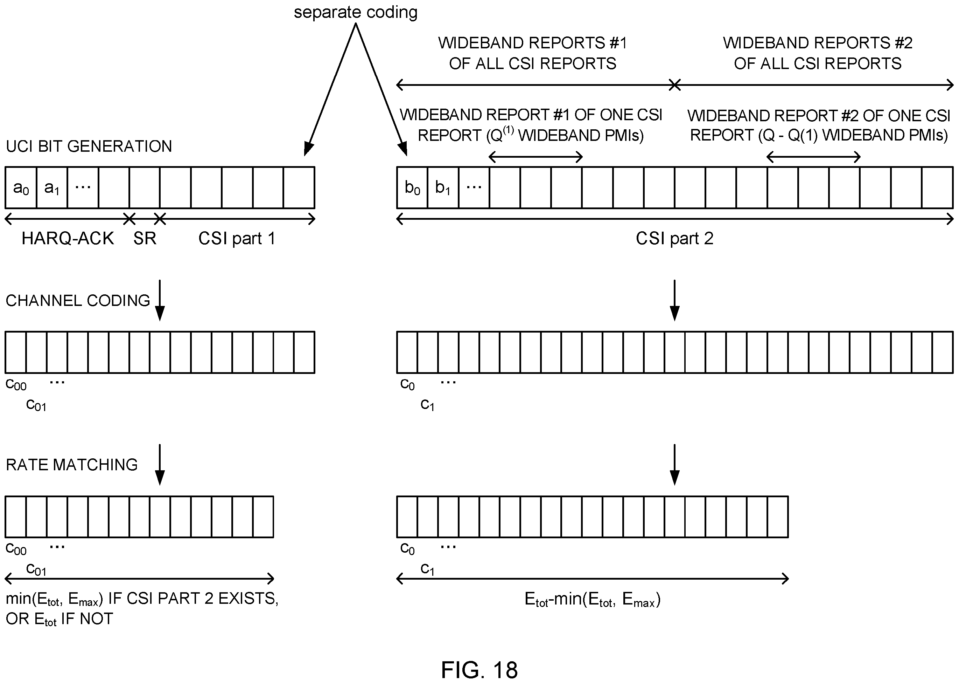

FIG. 18 shows a case that the CSI part 2 of the two-part CSI includes two wideband reports #1 and #2. In the CSI part 2, wideband reports #1 of the all CSI reports and wideband reports #2 of the all CSI reports are mapped in order. Wideband reports #1 of the all CSI reports include wideband report #1 of one CSI report ($Q^{(1)}$ wideband PMIs). Wideband reports #2 of the all CSI reports include wideband report #2 of one CSI report ($Q - Q^{(1)}$ wideband PMIs).

In using a rate-matched output sequence length $E_{tot}$ and the maximum coding bit length $E_{max}$ with respect to

a coding rate not exceeding the maximum PUCCH coding rate, an output sequence length obtained by adding the HARQ-ACK, the SR and the CSI part 1 in the case of using the two-part CSI may be min($E_{tot}$, $E_{max}$). The output sequence length on the basis of the CSI part 2 may be $E_{tot}$ - min ($E_{tot}$, $E_{max}$) .

According to Embodiment 2-2-2, the compatibility can be maintained with the CSI report in NR in Rel. 15 including two reports in the CSI part 2 of one CSI report.

[Embodiment 2-2-3]

The CSI part 2 of one CSI report may include q wideband reports. q wideband reports may respectively include $Q^{(1)}$, $Q^{(2)}$, ..., and $Q^{(q)}$ wideband PMI feedbacks (for example, PMI wideband information fields). The CSI part 2 of one CSI report may further include the DIs (for example, DI wideband information fields) if reported.

The first $Q^{(1)}$ wideband PMIs may be included in wideband report #1 in the CSI part 2 of CSI report #n. The corresponding DI if reported may be further included in wideband report #1 in the CSI part 2 of the CSI report #n.

The q-th $Q^{(q)}$ wideband PMI feedbacks having indices $\Sigma_1 = 1^{q-1}Q^{(1)} + 1$, ..., $\Sigma_1 = 1^q Q^{(1)}$ may be included in wideband report #q (q > 1) in the CSI part 2 of CSI report #n. The corresponding DI if reported may be further included in the wideband report #q in the CSI part 2 of CSI report #n.

[[Embodiment 2-2-3-1]]

Values of $Q^{(1)}$, $Q^{(2)}$, ..., and $Q^{(q)}$ may be configured or indicated by at least one of the RRC, the MAC CE, and the DCI, may be determined by UE and displayed (reported) by the indicator of the number of wideband PMI feedbacks in the CSI part 1, or may be obtained by combing those. q may be implicitly obtained or implicitly displayed (reported) by way of the number of $Q^{(1)}$, $Q^{(2)}$, ..., and $Q^{(q)}$ .

[[[Option 1]]]

$Q^{(1)}$, $Q^{(2)}$, ..., and $Q^{(q)}$ may be directly configured or indicated.

[[[Option 2]]]

Q, $Q^{(1)}$, $Q^{(2)}$, ..., and $Q^{(q-1)}$ may be configured or indicated. $Q^{(q)}$ may be obtained as $Q - \Sigma_{p=1}^{q-1} Q^{(p)}$ .

[[[Option 3]]]

Q may be configured or indicated. $Q^{(p)}$ for $1 \leq p < q$ may be obtained as floor (Q/q) . $Q^{(q)}$ may be obtained as $Q - \Sigma_{p=1}^{q-1} Q^{(p)}$ .

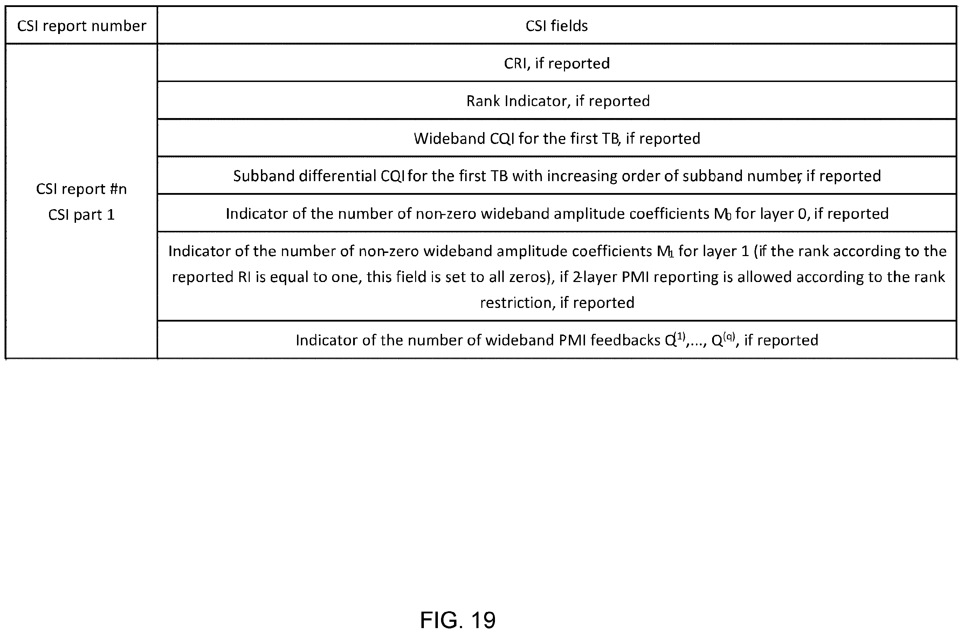

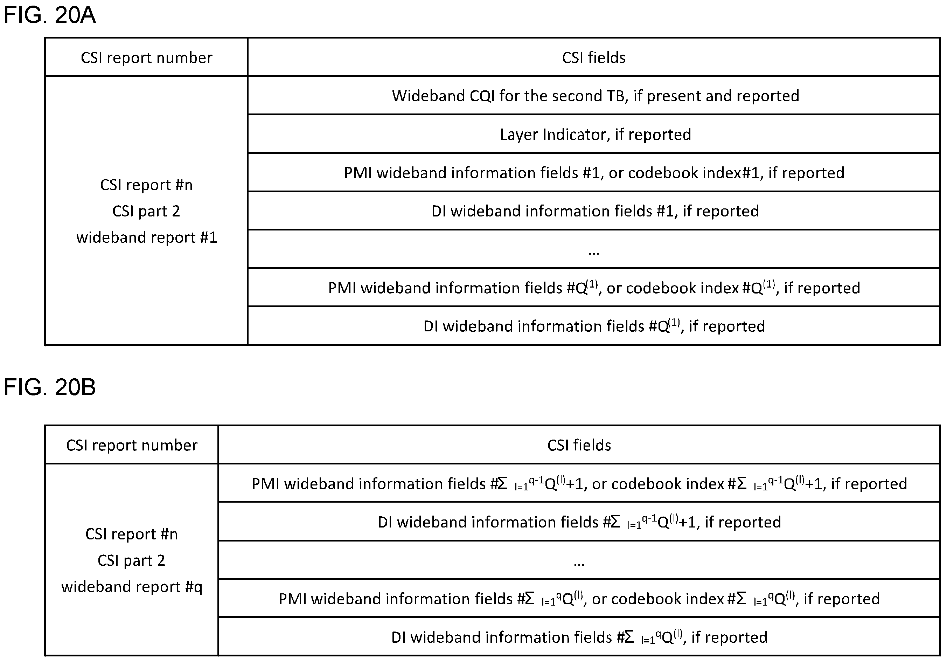

For example, in a case that Option 1 is applied, as shown in FIG. 19, the CSI part 1 of CSI report #n may include indicators of the numbers of wideband PMI feedbacks, $Q^{(1)}$, $Q^{(2)}$, ..., and $Q^{(q)}$, if reported. Here, the number of wideband reports, q, may be implicitly displayed (reported) by way of the number of $Q^{(1)}$, $Q^{(2)}$, ..., and $Q^{(q)}$. The CSI part 2 of CSI report #n may include wideband reports #1, #2, ..., #q. As shown in FIG. 20A, wideband report #1 may include $Q^{(1)}$ sets of the wideband PMI feedbacks or the codebook indices if reported, and the DIs if reported. As shown in FIG. 20B, wideband report #q may include $Q^{(q)}$ sets of the wideband PMI feedbacks or the codebook indices if reported, and the DIs if reported.

[[Embodiment 2-2-3-2]]

$Q^{(q)}$ may be displayed (reported) by an indicator of the number of wideband PMI feedbacks in wideband report #q - 1 in the CSI part 2. q may be determined by the UE and displayed (reported) in the CSI part 1, or may be explicitly configured or indicated by at least one of the RRC, the MAC CE, and the DCI.

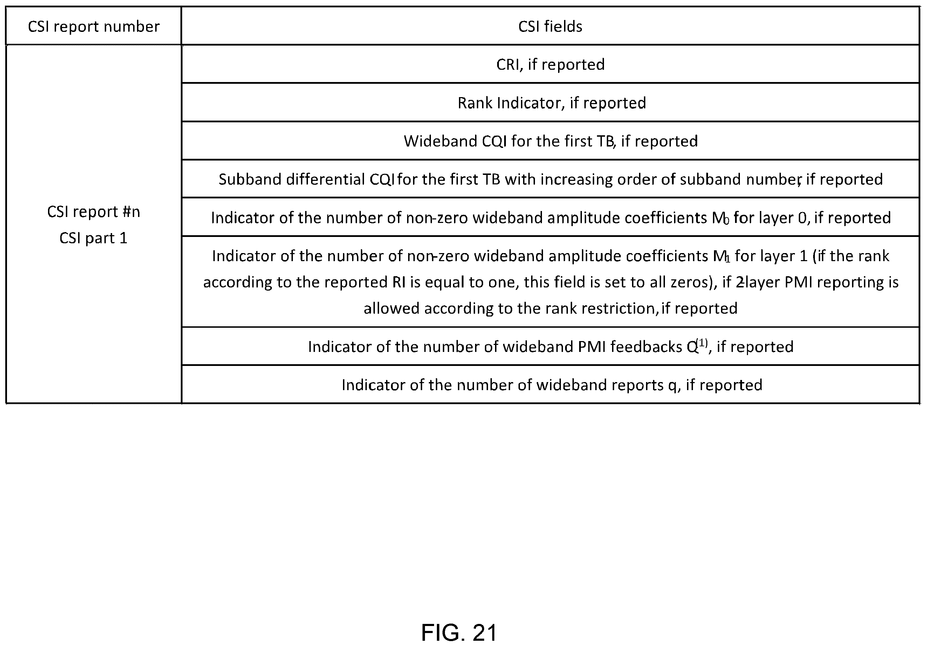

For example, as shown in FIG. 21, the CSI part 1 of CSI report #n may include an indicator of the number of wideband PMI feedbacks, $Q^{(1)}$, if reported, or an indicator of the number of wideband reports, q, if reported.

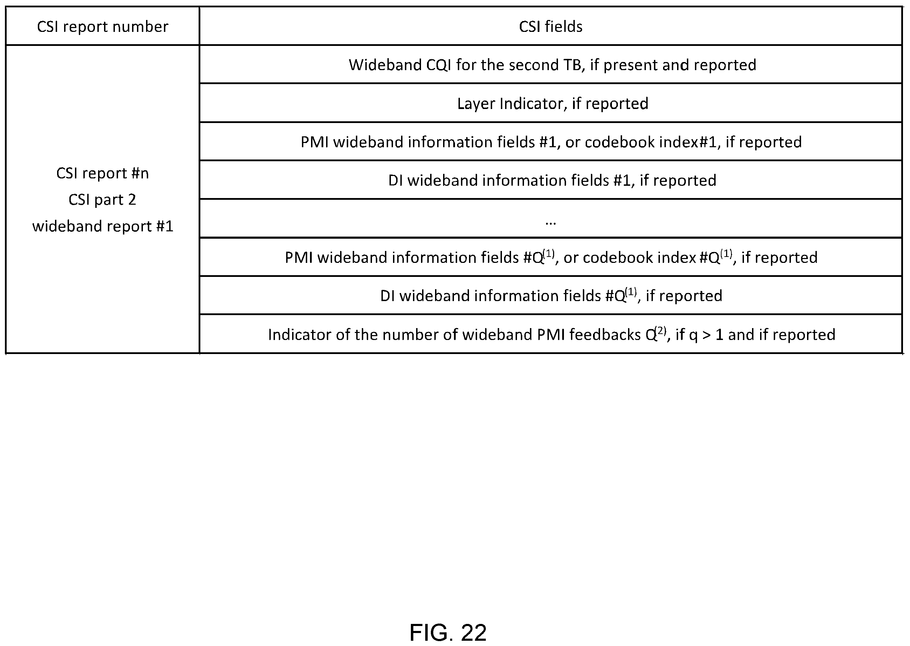

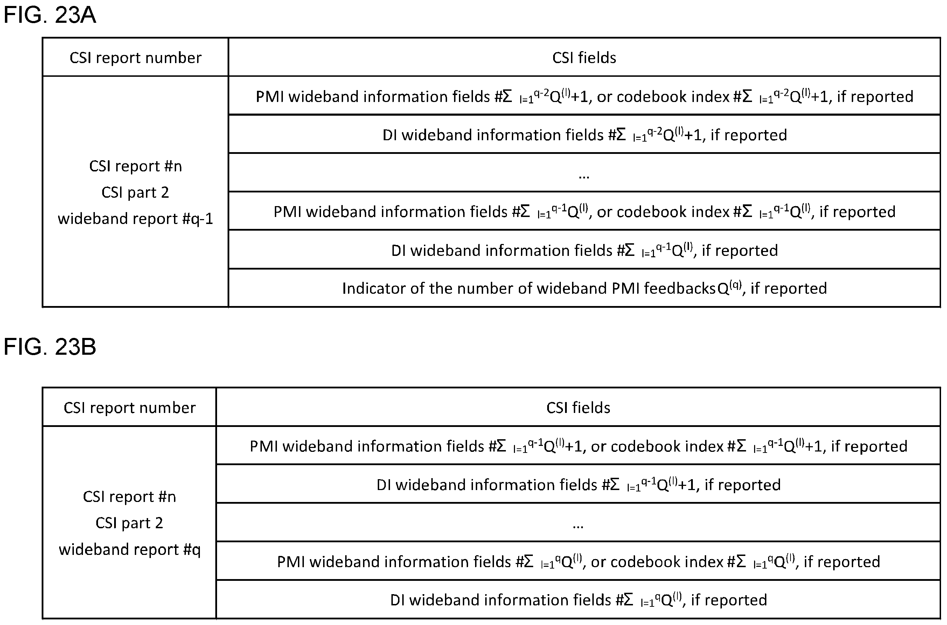

The CSI part 2 of CSI report #n may include wideband reports #1, #2, ..., #q. As shown in FIG. 22, wideband report #1 may include $Q^{(1)}$ sets of the wideband PMI feedbacks or the codebook indices if reported, and the DIs if reported, or may include an indicator of the number of wideband PMI feedbacks in the next wideband report #2, $Q^{(2)}$, if reported. As shown in FIG. 23A, wideband report #q - 1 may include $Q^{(q-1)}$ sets of the wideband PMI feedbacks or the codebook indices if reported, and the DIs if reported, or may include an indicator of the number of wideband PMI feedbacks in the next wideband report #q, $Q^{(q)}$, if reported. As shown in FIG. 23B, wideband report #q may include $Q^{(q)}$ sets of the wideband PMI feedbacks or the codebook indices if reported, and the DIs if reported.

[[Embodiment 2-2-3-3]]

If at least one CSI report is a two-part, two UCI bit sequences $a^{(1)}_0$, $a^{(1)}_1$, ..., $a^{(1)}_{A(1)-1}$ (length of $A^{(1)}$) and $a^{(2)}_0$, $a^{(2)}_1$, ..., $a^{(2)}_{A(2)-1}$ (length of $A^{(2)}$) may be generated.

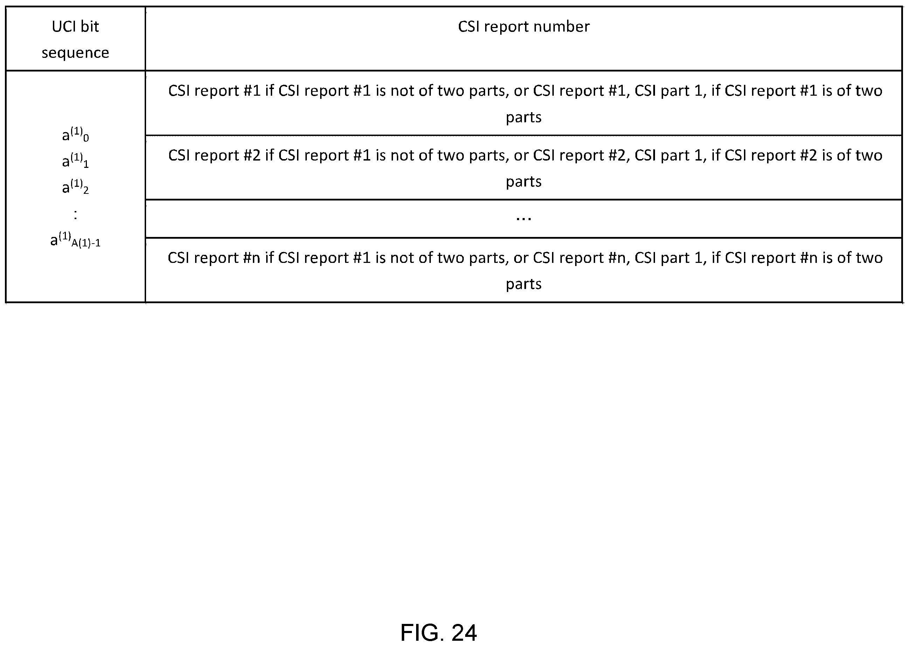

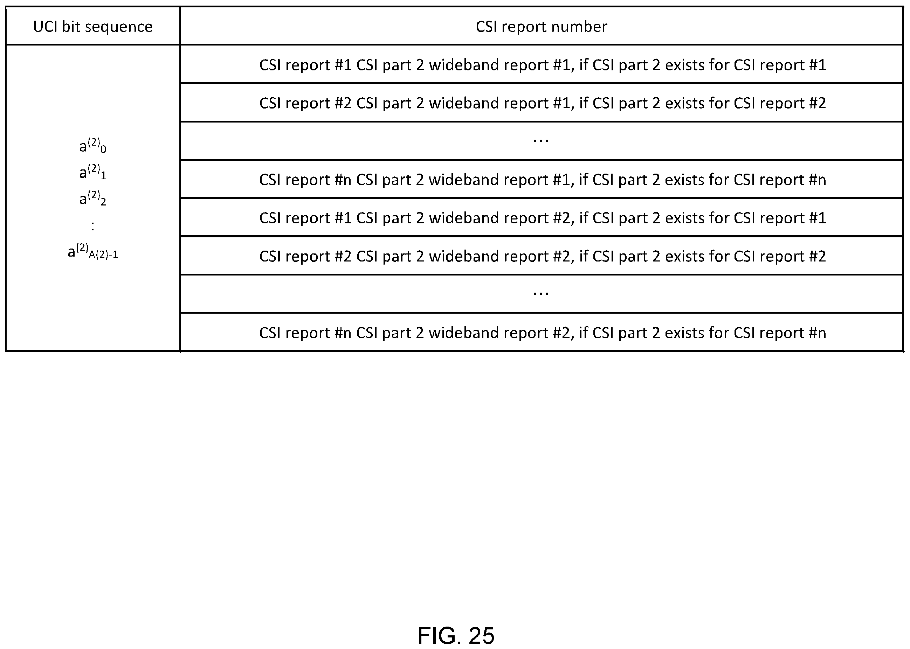

For the CSI part 1, the plurality of CSI fields of the all CSI reports #1, #2, ..., #n may be mapped to $a^{(1)}_0$, $a^{(1)}_1$, ..., $a^{(1)}_{A(1)-1}$ in an order from top to bottom in FIG. 24. Here, the CSI fields of CSI report #n may be those of the example shown in FIG. 7, 8, 19, or 21 described above. $A^{(1)}$ = n may be satisfied. For the CSI part 2, the plurality of CSI fields of the all CSI reports #1, #2, ..., #n may be mapped to $a^{(2)}_0$, $a^{(2)}_1$, ..., $a^{(2)}_{A(2)-1}$ in an order from top to bottom in FIG. 25. Here, the CSI fields of CSI report #n may be those of the example shown in FIG. 7, 8, 20A, 20B, 22, 23A, or 23B described above. $A^{(2)}$ = n may be satisfied.

The plurality of CSI fields in the CSI part 1 may correspond to CSI report #n if CSI report #n is not a two-part, or may correspond to the CSI part 1 in CSI report #n if CSI report #n is a two-part. The plurality of CSI fields in the CSI part 2 may correspond to the CSI part 1 of CSI report #n.

[[Embodiment 2-2-3-4]]

The UCI bit sequence for the CSI part 1 and the UCI bit sequence for the CSI part 2 may be separately coded. In a case that an actual coding rate is higher than the maximum coding rate, the CSI part 2 may be firstly dropped, and then, the CSI part 1 may be dropped, until the coding rate satisfies requirements of the maximum coding rate.

At least one of code block segmentation, channel coding, and rate matching in NR in Rel. 15 or those existing may be applied to two UCI bit sequences generated in Embodiment 2-2-3-2.

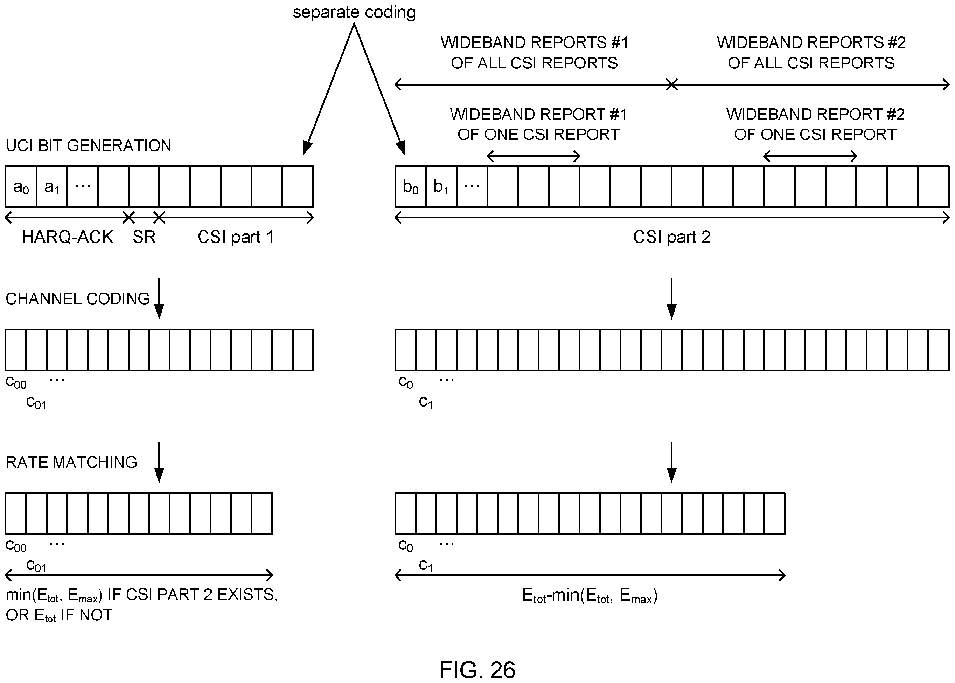

FIG. 26 shows a case that the CSI part 2 of the two-part CSI includes q wideband reports #1, #2, ..., #q. In the CSI part 2, wideband reports #1 of the all CSI reports, wideband reports #2 of the all CSI reports, ..., and wideband reports #q of the all CSI reports are mapped in order. Wideband reports #1 of the all CSI reports include wideband report #1 of one CSI report ($Q^{(1)}$ wideband PMIs). Wideband reports #q of the all CSI reports include wideband report #q of one CSI report ($Q^{(q)}$ wideband PMIs).

In using a rate-matched output sequence length $E_{tot}$ and the maximum coding bit length $E_{max}$ with respect to a coding rate not exceeding the maximum PUCCH coding rate, an output sequence length obtained by adding the HARQ-ACK, the SR and the CSI part 1 in the case of using the two-part CSI may be $\min(E_{tot}, E_{max})$. The output sequence length on the basis of the CSI part 2 may be $E_{tot} - \min(E_{tot}, E_{max})$.

According to Embodiment 2-2-3, flexibility of a plurality of wideband PMI feedbacks can be increased, and flexibility of mapping order for a plurality of CSI fields of one CSI report can be increased.

<Embodiment 3> m CSI Parts

In this embodiment, a case that one CSI report includes m CSI parts will be described.

For a plurality of wideband PMI feedbacks, the CSI bit generation in the UCI including an m-part CSI report may be defined.

<<Embodiment 3-1>> CSI Fields in CSI Part 1

A plurality of CSI fields of one CSI report in the CSI part 1 may include at least one of an indicator of the number of CSI parts, m, if reported, an indicator of the number of a plurality of wideband PMI feedbacks in m - 1 CSI parts (for example, other CSI parts than the CSI part 1) if reported, and $Q_0$ wideband PMI feedbacks (for example, PMI wideband information fields) if reported. The plurality of CSI fields of one CSI report in the CSI part 1 may further include the DIs corresponding to the respective $Q_0$ wideband PMI feedbacks (for example, DI wideband information fields) if reported.

[Embodiment 3-1-1]

The plurality of CSI fields of one CSI report in the CSI part 1 may include only an indicator of the number of the plurality of wideband PMI feedbacks in each CSI part (for example, each of other CSI parts than the CSI part 1) if reported, or may further include the indicator of the number of CSI parts, m, if reported.

[Embodiment 3-1-2]

The plurality of CSI fields of one CSI report in the CSI part 1 may include at least one of one wideband PMI feedback if reported, the indicator of the number of the plurality of wideband PMI feedbacks in each CSI part (for example, each of other CSI parts than the CSI part 1) if reported, and the indicator of the number of CSI parts, m, if reported. The plurality of CSI fields of one CSI report in the CSI part 1 may further include the DI, if reported.

The number of CSI parts, m, may be implicitly notified (reported), or explicitly notified (reported).

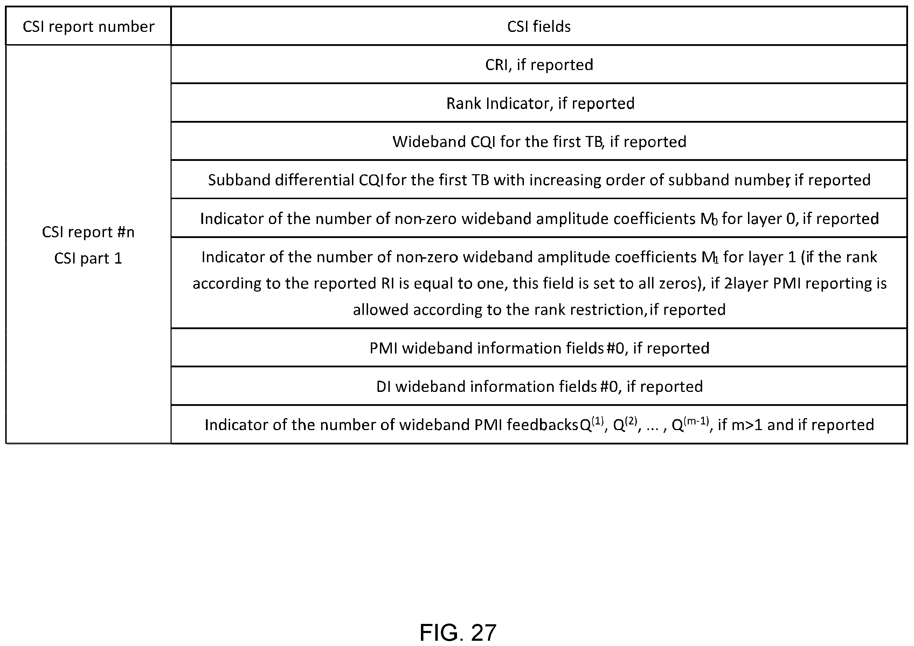

For example, as shown in FIG. 27, the CSI part 1 of CSI report #n may include PMI wideband information field information #0 if reported, DI wideband information field information #0 if reported, and indicators of the numbers of the wideband PMI feedbacks in each of rest m - 1 CSI parts (CSI part 2 to CSI part m), $Q^{(1)}$, $Q^{(2)}$, ..., $Q^{(m-1)}$, if reported.

In this case, the number of CSI parts, m, may be implicitly notified (reported) by way of the number of $Q^{(1)}$, $Q^{(2)}$, ..., and $Q^{(m-1)}$, m - 1. The number of CSI parts, m, may be explicitly notified (reported) by that the CSI part 1 of CSI report #n includes the indicator of the number of CSI parts, m.

The CSI bit generation in the UCI according to Embodiment 1 may be applied to one wideband PMI feedback.

[Embodiment 3-1-3]

The plurality of CSI fields of one CSI report in the CSI part 1 may include at least one of $Q_0$ wideband PMI feedbacks if reported, the indicator of the number of the plurality of wideband PMI feedbacks in each CSI part (for example, each of other CSI parts than the CSI part 1) if reported, and the indicator of the number of CSI parts, m, if reported. The plurality of CSI fields of one CSI report in the CSI part 1 may further include the DI, if reported.

A configuration or a determination of $Q_0$ may be in accordance with at least one of Embodiment 1-1-2 and Embodiments 1-1-2-1 to 1-1-2-3.

In Embodiment 3-1, the indicator of the number of the plurality of wideband PMI feedbacks in m - 1 CSI parts may depend on a design of a configuration of the CSI part m defined in Embodiment 3-2 described later.

<<Embodiment 3-2>> CSI Fields in CSI Part m

The plurality of CSI fields of one CSI report in the CSI part m may include at least one of $Q^{(m)}$ wideband PMI feedbacks (for example, PMI wideband information fields) if reported, and the indicator of the number of wideband PMI feedbacks. The plurality of CSI fields of one CSI report in the CSI part m may further include the DI (for example, DI wideband information field) if reported.

The CSI part m may include one or a plurality of wideband reports in the CSI part 2 described in Embodiment 2-2. In other words, a configuration in which the CSI part 2 according to Embodiment 2-2 is interpreted as CSI part m may be applied to the CSI part m according to Embodiment 3-2.

For example, the q-th $Q^{(m)}$ wideband PMI feedbacks having indices $\Sigma_{1=1}^{m-1}Q^{(1)} + 1, ..., \Sigma_{1=1}^{m}Q^{(1)}$ may be included in the CSI part m of CSI report #n. The corresponding DI if reported may be further included in the CSI part m of CSI report #n.

[Embodiment 3-2-1]

Values of the numbers of wideband PMI fields in each of other CSI parts than the CSI part 1, $Q^{(2)}$, ..., and $Q^{(m)}$, may be configured or indicated by at least one of the RRC, the MAC CE, and the DCI, may be determined by UE and displayed (reported) by the indicator of the number of wideband PMI feedbacks in the CSI part 1, or may be obtained by combing those. m may be implicitly obtained or implicitly displayed (reported) by way of the number of $Q^{(2)}$, ..., and $Q^{(m)}$.

[[[Option 1]]]

$Q^{(2)}$, ..., and $Q^{(m)}$ may be directly configured or indicated.

[[[Option 2]]]

Q, $Q^{(2)}$, ..., and $Q^{(m-1)}$ may be configured or indicated. $Q^{(m)}$ may be obtained as $Q - \Sigma_{p=2}^{m-1} Q^{(p)}$.

[[[Option 3]]]

Q may be configured or indicated. $Q^{(p)}$ for $1 \leq p < m$ may be obtained as floor $(Q/(m-1))$. $Q^{(m)}$ may be obtained as $Q - \Sigma_{p=2}^{m-1} Q^{(p)}$.

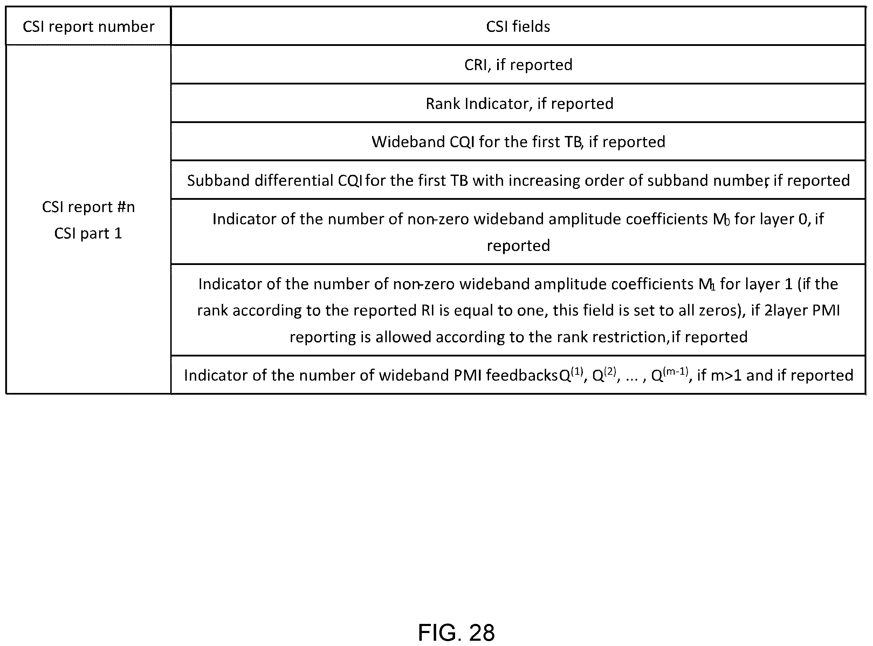

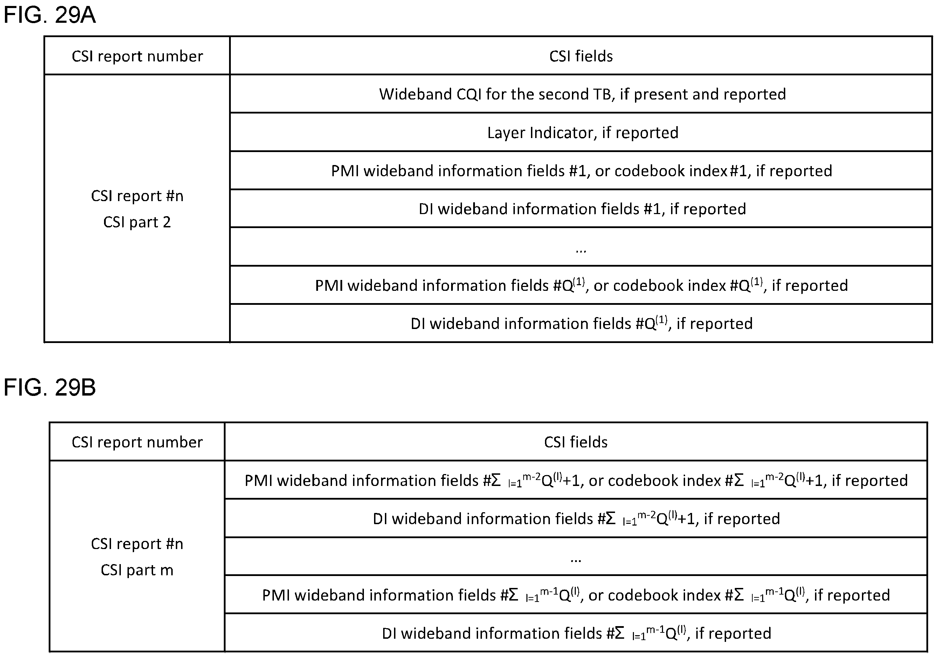

For example, in a case that Options 1 in Embodiments 3-1-1 and 3-2-1 are applied to m CSI parts (m > 2), as shown in FIG. 28, the CSI part 1 of CSI report #n may include indicators of the numbers of wideband PMI feedbacks in each of rest m - 1 CSI parts (CSI part 2 to CSI part m), $Q^{(1)}$, $Q^{(2)}$, ..., and $Q^{(m-1)}$, if reported. Here, the number of CSI parts, m, may be implicitly displayed (reported) by way of the number of $Q^{(1)}$, $Q^{(2)}$, ..., and $Q^{(m-1)}$. m - 1. As shown in FIG. 29A, the CSI part 2 of CSI report #n may include $Q^{(1)}$ sets of the wideband PMI feedbacks or the codebook indices if reported, and the DIs if reported. If m > 2, as shown in FIG. 29B, the CSI part m of CSI report #n may include $Q^{(m-1)}$ sets of the wideband PMI feedbacks or the codebook indices if reported, and the DIs if reported.

[Embodiment 3-2-2]

The value of $Q^{(m)}$ may be determined by the UE and displayed (reported) by an indicator of the number of wideband PMI feedbacks in the CSI part m - 1. The number of CSI parts, m, may be explicitly configured or indicated by at least one of the RRC, the MAC CE, and the DCI, or may be determined by UE and displayed (reported) by the indicator of the number of wideband PMI feedbacks in the CSI part 1.

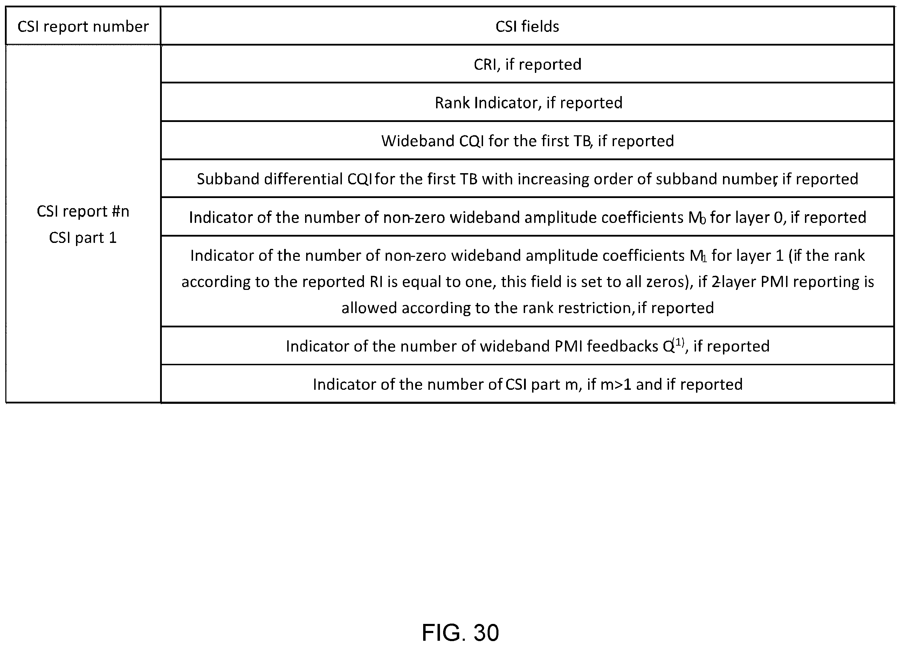

For example, as shown in FIG. 30, the CSI part 1 of CSI report #n may include an indicator of the number of wideband PMI feedbacks in the next CSI part (CSI part 2), $Q^{(1)}$, if reported and the indicator of the number of CSI parts, m, if reported.

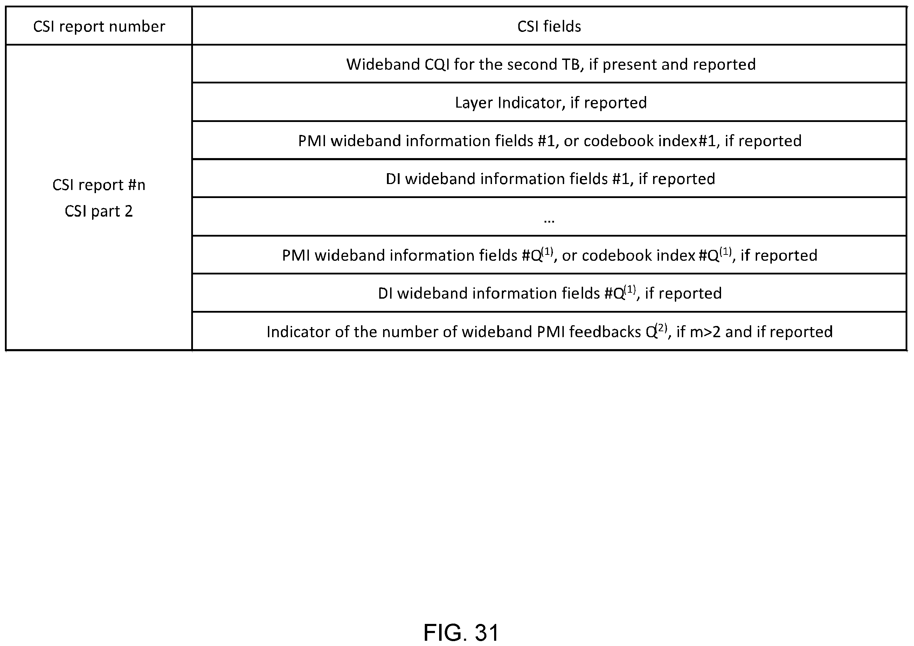

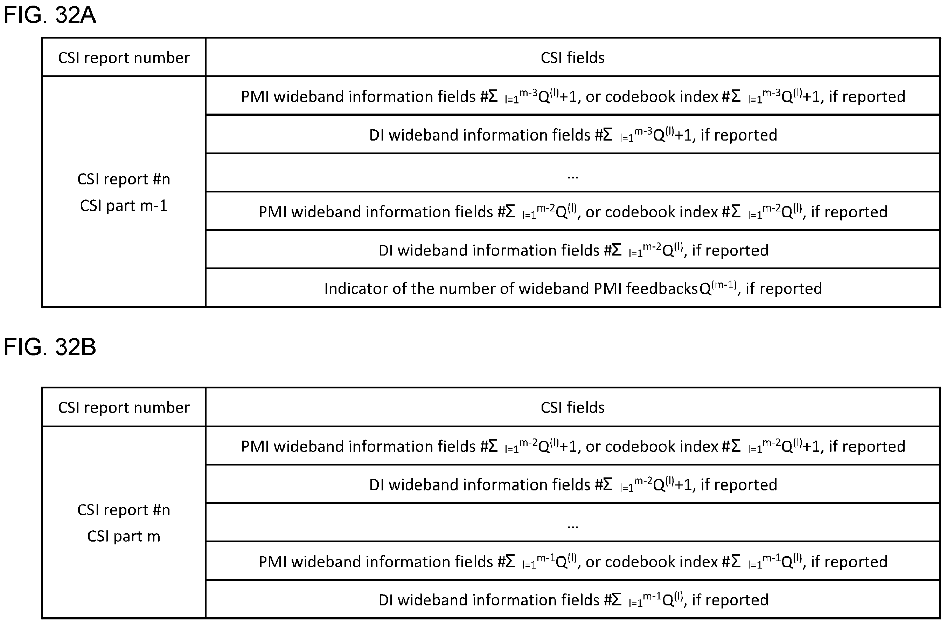

If m is larger than 3, as shown in FIG. 31, the CSI part 2 of CSI report #n may include $Q^{(1)}$ sets of the wideband PMI feedbacks or the codebook indices if reported, and the DIs if reported, and the indicator of the number of wideband PMI feedbacks in the next CSI part (CSI part 3), $Q^{(2)}$, if reported. As shown in FIG. 32A, the CSI part m - 1 (m > 3) of CSI report #n may include $Q\_^{(m-2)}$ sets of the wideband PMI feedbacks or the codebook indices if reported, and the DIs if reported, and the indicator of the number of wideband PMI feedbacks in the next CSI part (CSI part m), $Q^{(m-1)}$, if reported. As shown in FIG. 32B, the CSI part m (m > 2) of CSI report #n may include $Q^{(m-1)}$ sets of the wideband PMI feedbacks or the codebook indices if reported, and the DIs if reported.

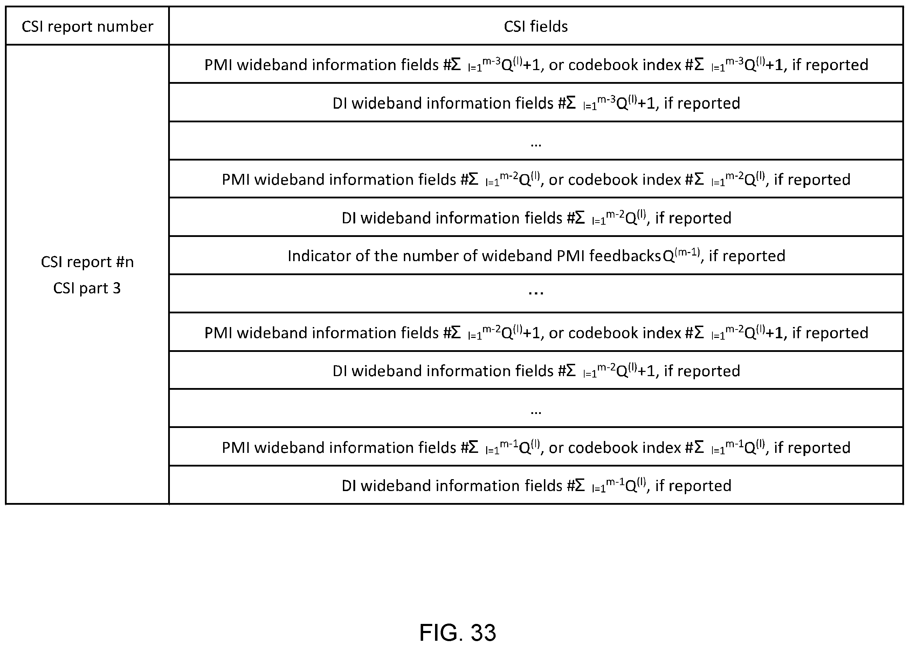

In a case of using a three-part CSI, similar to FIG. 31 described above, the CSI part 2 of CSI report #n may include $Q^{(1)}$ sets of the wideband PMI feedbacks or the codebook indices if reported, and the DIs if reported, and the indicator of the number of wideband PMI feedbacks in the next CSI part (CSI part 3), $Q^{(2)}$, if reported. As shown in FIG. 33, the CSI part 3 of CSI report #n may include $Q^{(1)}$ sets of the wideband PMI feedbacks or the codebook indices if reported, and the DIs if reported, where 1 = 2, 3, ..., m - 1. Here, m may represent not the number of CSI parts but any integer more than 1. The CSI part 3 of CSI report #n may include an indicator of the number of the next wideband PMI feedbacks, $Q^{(1)}$, if reported between $Q^{(1-1)}$ sets and $Q^{(1)}$ sets.

<<Embodiment 3-3>> UCI Bit Sequence Generation

If at least one CSI report is a m-part, m UCI bit sequences $a^{(1)}_0$, $a^{(1)}_1$, ..., $a^{(1)}_{A(1)-1}$ (length of $A^{(1)}$), $a^{(2)}_0$, $a^{(2)}_1$, ..., $a^{(2)}_{A(2)-1}$ (length of $A^{(2)}$), ..., $a^{(m)}_0$, $a^{(m)}_1$, ..., $a^{(m)}_{A(m)-1}$ (length of $A^{(m)}$) may be generated.

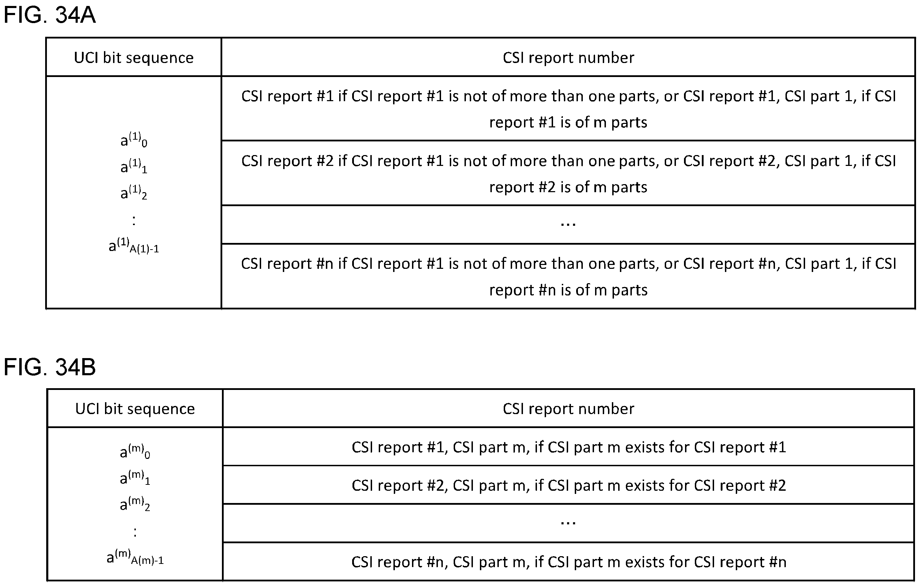

For the CSI part 1, the plurality of CSI fields of the all CSI reports #1, #2, ..., #n may be mapped to $a^{(1)}_0$, $a^{(1)}_1$, ..., $a^{(1)}_{A(1)-1}$ in an order from top to bottom in FIG. 34A. Here, the CSI fields of CSI report #n may be those of the example shown in FIG. 7, 8, 28, or 30 described above. $A^{(1)}$ = n may be satisfied. For the CSI part m, the plurality of CSI fields of the all CSI reports #1, #2, ..., #n may be mapped to $a^{(m)}_0$, $a^{(m)}_1$, ..., $a^{(m)}_{A(m)-1}$ in an order from top to bottom in FIG. 34B. Here, the CSI fields of CSI report #n may be those of the example shown in FIG. 23A, 23B, 31, 32A, or 32B described above. $A^{(m)}$ = n may be satisfied.

The plurality of CSI fields in the CSI part 1 may correspond to CSI report #n if CSI report #n is not a two-part (for example, in Embodiment 1-1-1 or 1-1-2), or may correspond to the CSI part 1 of CSI report #n if CSI report #n is a two-part (for example, in Embodiment 3-1-1 or 3-1-2). The plurality of CSI fields in the CSI part m may correspond to the CSI part m of CSI report #n (for example, in Embodiment 3-2-1 or 3-2-2).

<<Embodiment 3-4>> Coding/Rate Matching

m UCI bit sequences for the CSI part 1, CSI part 2, ..., and CSI part m may be separately coded. In a case that an actual coding rate is higher than the maximum coding rate, the CSI part may be dropped in a descending order until the coding rate satisfies requirements of the maximum coding rate (specifically, the CSI part m is firstly dropped, the CSI part m - 1 is next dropped, the CSI part m - 2 is next dropped, ...).

At least one of code block segmentation, channel coding, and rate matching in NR in Rel. 15 or those existing may be applied to the m UCI bit sequences generated in Embodiment 3-3.

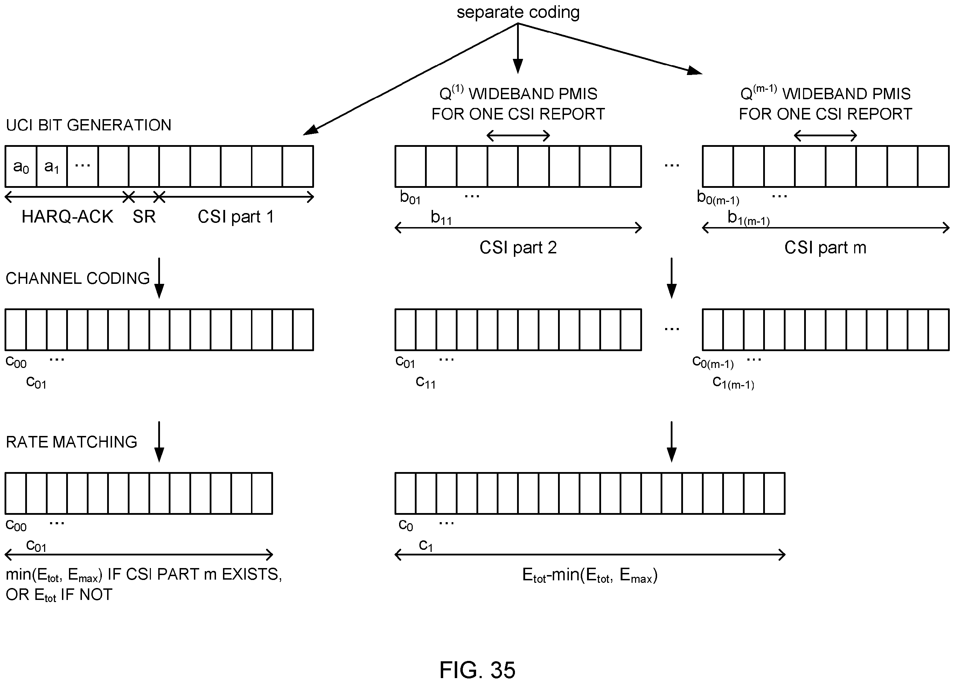

FIG. 35 shows an example of the m-part CSI. The CSI parts 1, 2, ..., and m are separately coded. The CSI parts 1, 2, ..., and m are mapped in order. The CSI part 2 of one CSI report includes $Q^{(1)}$ wideband PMIs. The CSI part m of one CSI report includes $Q^{(m-1)}$ wideband PMIs.

In using a rate-matched output sequence length $E_{tot}$ and the maximum coding bit length $E_{max}$ with respect to a coding rate not exceeding the maximum PUCCH coding rate, an output sequence length obtained by adding the HARQ-ACK, the SR and the CSI part 1 in the case of using the two-part CSI may be $\min(E_{tot}, E_{max})$. The output sequence length on the basis of the CSI parts (for example, CSI parts 2 to m) other than CSI part 1 may be $E_{tot} - \min(E_{tot}, E_{max})$.

According to Embodiment 3, a plurality of wideband PMIs are separately coded in a plurality of CSI parts, which can improve the reliability.

<Embodiment 4> Determination Method of CSI Part Number

**[0249]** In this embodiment, a method of determining or configuring one or more CSI parts of one CSI reports.

<<Embodiment 4-1>>

In a system adopting Embodiment 1 (one-part CSI) and Embodiment 2 (two-part CSI), whether one CSI report includes a one-part or a two-part may be explicitly configured or indicated by at least one of the RRC, the MAC CE, and the DCI, may be implicitly configured or indicated by at least one of the RRC, the MAC CE, and the DCI, or may be determined by the UE and reported to the base station in the UCI.

<<Embodiment 4-2>>

In a system adopting Embodiment 1 (one-part CSI) and Embodiment 3 (m-part CSI), whether one CSI report includes a one-part or a m-part may be explicitly configured or indicated by at least one of the RRC, the MAC CE, and the DCI, may be implicitly configured or indicated by at least one of the RRC, the MAC CE, and the DCI, or may be determined by the UE and reported to the base station in the UCI.
If m equals to 2 or more, a combination of Embodiments 1, 2, and 3 is included. Specifically, the system may be a system adopting Embodiment 1 (one-part CSI), Embodiment 2 (two-part CSI), and Embodiment 3 (m-part CSI).

<<Embodiment 4-3>>

In a system adopting Embodiment 2 (two-part CSI) and Embodiment 3 (m-part CSI), whether one CSI report includes a two-part or a m-part may be explicitly configured or indicated by at least one of the RRC, the MAC CE, and the DCI, may be implicitly configured or indicated by at least one of the RRC, the MAC CE, and the DCI, or may be determined by the UE and reported to the base station in the UCI.

(Other Aspects)

In each Embodiment, each piece of the DI wideband information may be mapped after the corresponding PMI wideband information. For example, in CSI report #1, wideband DI information field #1 may be mapped after corresponding wideband PMI information field #1.
If PMI field #1 is present in the CSI part 2, DI field #1 may be also present in CSI part 2. If PMI field #1 is present in the CSI part 1, DI field #1 may be also present in CSI part 1.
If only wideband PMI without the corresponding DI is normally received by the base station, the CSI may not be accurately reestablished. Each piece of the DI wideband information is mapped after the corresponding PMI wideband information, thereby, the DI can be given a priority the same as for the wideband PMI and can be used together with the wideband PMI.

(Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

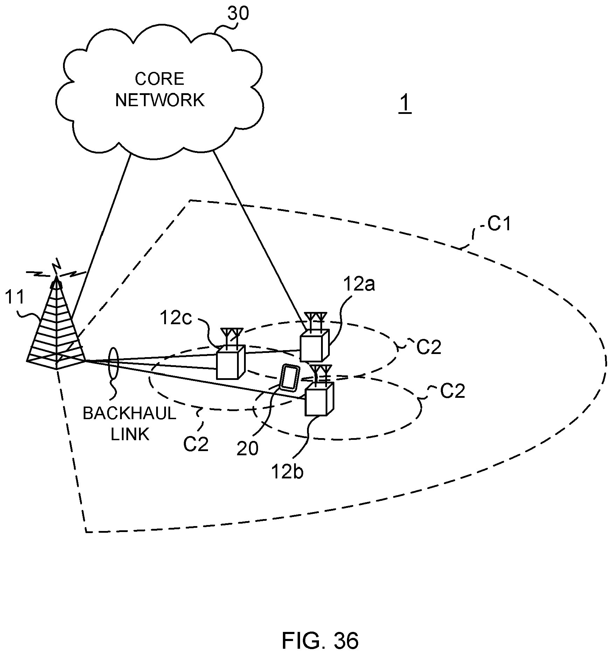

FIG. 36 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).
The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.
In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.
The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

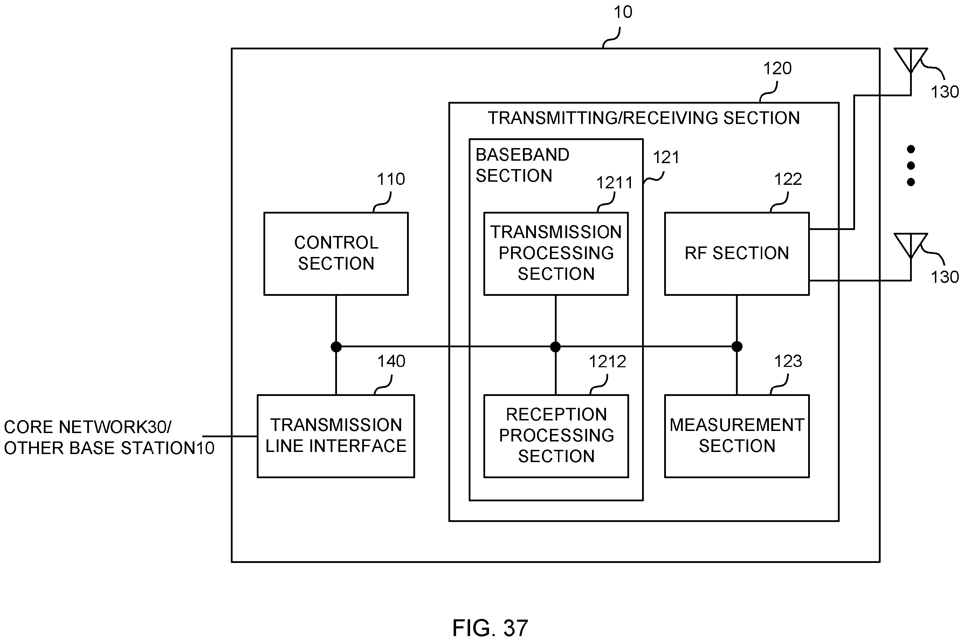

FIG. 37 is a diagram to show an example of a structure of the base station according to one embodiment. The base station 10 includes a control section 110, a transmitting/receiving section 120, transmitting/receiving antennas 130 and a transmission line interface (communication path interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the ommunication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The ommunication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the ommunication path interface 140.

(User Terminal)

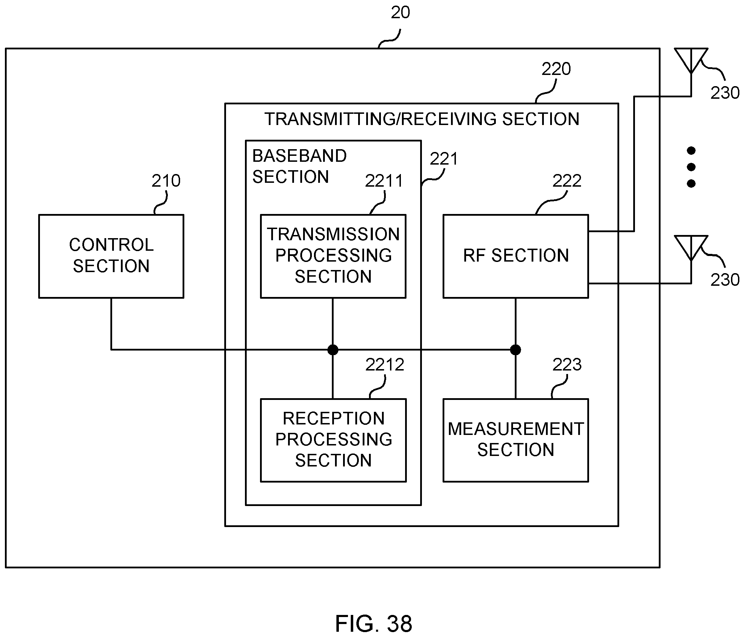

FIG. 38 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The control section 210 may generate a channel state information (CSI) report including a first field (for example, PMI wideband information field) indicating each of a plurality of precoding matrix indicators (PMIs) and a second field (for example, DI wideband information field) indicating a delay corresponding to the PMI The transmitting/receiving section 220 may transmit the CSI report (Embodiment 1).

The CSI report may include a plurality of sets of the first fields and the second fields.

The control section 210 may map the second field after the first field in the CSI report.

The first field may indicate the PMI wideband information.

The second field may indicate an index of the delay corresponding to the PMI wideband information.

The control section 210 may generate a plurality of channel state information (CSI) parts, at least one of the CSI parts including a first field indicating each of a plurality of precoding matrix indicators (PMIs) and a second field indicating a delay corresponding to the PMI. The transmitting/receiving section 220 may transmit the plurality of CSI parts (Embodiments 2 and 3).

The at least one of CSI parts may include a plurality of sets of the first fields and the second fields.

The control section 210 may map the second field after the first field in the at least one of CSI report.

The first field may indicate the PMI wideband information.

The second field may indicate an index of the delay corresponding to the PMI wideband information.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

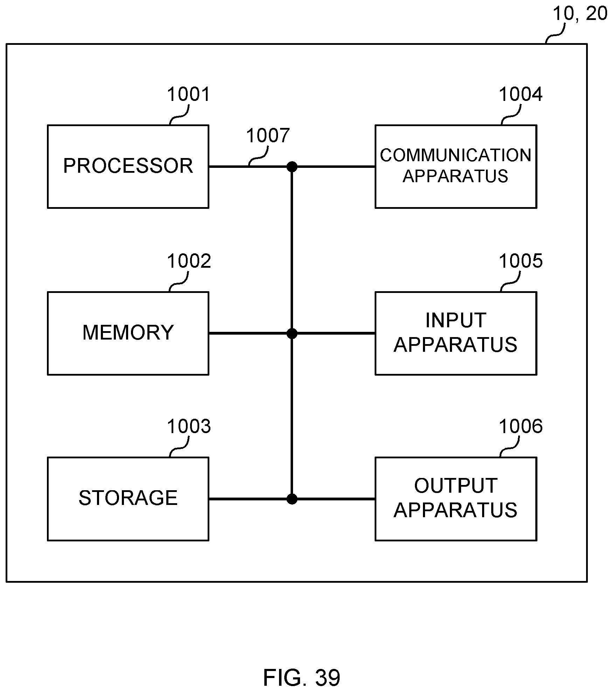

For example, a base station, a user terminal, and so on according to one embodiment of the present disclosure may function as a computer that executes the processes of the radio communication method of the present disclosure. FIG. 39 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a control section that generates a channel state information (CSI) report including a first field indicating each of a plurality of precoding matrix indicators (PMIs) and a second field indicating a delay corresponding to the PMI; and
   a transmitting section that transmits the CSI report.

2. The terminal according to claim 1, wherein
   the CSI report includes a plurality of sets of the first fields and the second fields.

3. The terminal according to claim 1 or 2, wherein
   the control section maps the second field after the first field in the CSI report.

4. The terminal according to any one of claims 1 to 3, wherein the first field indicate PMI wideband information.

5. The terminal according to claim 4, wherein
   the second field indicates an index of the delay corresponding to the PMI wideband information.

6. A radio communication method of a terminal, the radio communication method comprising:

   generating a channel state information (CSI) report including a first field indicating each of a plurality of precoding matrix indicators (PMIs) and a second field indicating a delay corresponding to the PMI; and
   transmitting the CSI report.

BASE STATION

UE

RS —⟋ S101 →

⟋ S102

ESTIMATE
CHANNEL

CSI —⟋ S103 ←

PDSCH —⟋ S104 →

FIG. 1

EP 4 021 055 A1

## FIG. 2A

| WB |   | SB#1 |
|----|---|------|
|    | + | ⋮    |
|    |   | SB#k-1 |
|    |   | SB#k |

SUBBAND PMI REPORTING ⟶

| SC#1 |
|------|
| SC#2 |
| SC#3 |
| SC#4 |
| ⋮    |
| SC#n |

## FIG. 2B

| WB#1 |       | WB#Q |
|------|-------|------|
|      | + ⋯ + |      |

WIDEBAND PMI REPORTING ⟶

| SC#1 |
|------|
| SC#2 |
| SC#3 |
| SC#4 |
| ⋮    |
| SC#n |

| | |
|---|---|
| WIDEBAND INFORMATION #1 | WIDEBAND INFORMATION #2 |
| DI INDICATING DELAY $\tau_1$ DMI/PMI INDICATING COEFFICIENT $g_1$ | DI INDICATING DELAY $\tau_2$ DMI/PMI INDICATING COEFFICIENT $g_2$ |

$$\boldsymbol{w}^{(1)}= e^{-j2\pi\tau_1 f_1}\boldsymbol{g}_1 + e^{-j2\pi\tau_2 f_1}\boldsymbol{g}_2 \qquad \text{SUBCARRIER \#1}$$

$$\boldsymbol{w}^{(2)}= e^{-j2\pi\tau_1 f_2}\boldsymbol{g}_1 + e^{-j2\pi\tau_2 f_2}\boldsymbol{g}_2 \qquad \text{SUBCARRIER \#2}$$

$$\boldsymbol{w}^{(3)}= e^{-j2\pi\tau_1 f_3}\boldsymbol{g}_1 + e^{-j2\pi\tau_2 f_3}\boldsymbol{g}_2 \qquad \text{SUBCARRIER \#3}$$

$$\vdots \qquad \vdots$$

$$\boldsymbol{w}^{(n)}= e^{-j2\pi\tau_1 f_n}\boldsymbol{g}_1 + e^{-j2\pi\tau_2 f_n}\boldsymbol{g}_2 \qquad \text{SUBCARRIER \#n}$$

FIG. 3

EP 4 021 055 A1

| WIDEBAND INFORMATION #1 | WIDEBAND INFORMATION #2 |
|---|---|
| DI INDICATING DELAY $\tau_1$ DMI/PMI INDICATING COEFFICIENT $\hat{g}^{(1)}$ WITH TILDE | DI INDICATING DELAY $\tau_2$ DMI/PMI INDICATING COEFFICIENT $\hat{g}^{(2)}$ WITH TILDE |

SPACE INFORMATION

CORDWORD $\hat{w}$ WITH TILDE SELECTED FROM CODEBOOK $W^{**}$ AND ANGLE $\theta$

| | |
|---|---|
| $w^{(1)} = \left( e^{-j2\pi\tau_1 f_1}\, \hat{g}^{(1)} + e^{-j2\pi\tau_2 f_1}\, \hat{g}^{(2)} \right) \mathbf{A}\,(\boldsymbol{\theta})\hat{w}$ | SUBCARRIER #1 |
| $w^{(2)} = \left( e^{-j2\pi\tau_1 f_2}\, \hat{g}^{(1)} + e^{-j2\pi\tau_2 f_2}\, \hat{g}^{(2)} \right) \mathbf{A}\,(\boldsymbol{\theta})\hat{w}$ | SUBCARRIER #2 |
| $\vdots$ | $\vdots$ |
| $w^{(n)} = \left( e^{-j2\pi\tau_1 f_n}\, \hat{g}^{(1)} + e^{-j2\pi\tau_2 f_n}\, \hat{g}^{(2)} \right) \mathbf{A}\,(\boldsymbol{\theta})\hat{w}$ | SUBCARRIER #n |

$$A(\theta) = [a(\theta_1), \ldots, a(\theta_L)]$$

$$a(\theta_l) = \left[ 1, e^{-j2\pi\frac{d}{\lambda_c}\sin(\theta_l)}, \ldots, e^{-j2\pi(M-1)\frac{d}{\lambda_c}\sin(\theta_l)} \right]^T$$

FIG. 4

| | | | |
|---|---|---|---|
| **WIDEBAND INFORMATION #1** | **WIDEBAND INFORMATION #2** | $\boldsymbol{w}^{(1)}= e^{-j2\pi\tau_1 f_1}\hat{g}^{(1)}\mathbf{A}(\boldsymbol{\theta}_1)\hat{w}_1 + e^{-j2\pi\tau_2 f_1}\hat{g}^{(2)}\mathbf{A}(\boldsymbol{\theta}_2)\hat{w}_2$ | SUBCARRIER #1 |
| CORDWORD $\hat{w}_1$ WITH TILDE AND ANGLE $\theta_1$ FOR DELAY $\tau_1$, AND COEFFICIENT $\hat{g}^{(1)}$ WITH TILDE | CORDWORD $\hat{w}_2$ WITH TILDE AND ANGLE $\theta_2$ FOR DELAY $\tau_2$, AND COEFFICIENT $\hat{g}^{(2)}$ WITH TILDE | $\boldsymbol{w}^{(2)}= e^{-j2\pi\tau_1 f_2}\hat{g}^{(1)}\mathbf{A}(\boldsymbol{\theta}_1)\hat{w}_1 + e^{-j2\pi\tau_2 f_2}\hat{g}^{(2)}\mathbf{A}(\boldsymbol{\theta}_2)\hat{w}_2$ | SUBCARRIER #2 |
| | | $\vdots$ | $\vdots$ |
| | | $\boldsymbol{w}^{(n)}= e^{-j2\pi\tau_1 f_n}\hat{g}^{(1)}\mathbf{A}(\boldsymbol{\theta}_1)\hat{w}_1 + e^{-j2\pi\tau_2 f_n}\hat{g}^{(2)}\mathbf{A}(\boldsymbol{\theta}_2)\hat{w}_2$ | SUBCARRIER #n |

FIG. 5

| CSI PART 1 OF ALL CSI REPORTS | CSI PART 2 OF ALL CSI REPORTS | ⋯ | CSI PART m OF ALL CSI REPORTS |
|---|---|---|---|

| WIDEBAND REPORT #1 OF ALL CSI REPORTS | WIDEBAND REPORT #2 OF ALL CSI REPORTS | ⋯ | WIDEBAND REPORT #q OF ALL CSI REPORTS |
|---|---|---|---|

| CSI REPORT #1 | CSI REPORT #2 | ⋯ | CSI REPORT #n |
|---|---|---|---|

| PMI WIDEBAND INFORMATION FIELD #1 | PMI WIDEBAND INFORMATION FIELD #2 | ⋯ | PMI WIDEBAND INFORMATION FIELD #$Q^{(2)}$ |
|---|---|---|---|

FIG. 6

EP 4 021 055 A1

| CSI report number | CSI fields |
|---|---|
| CSI report #n | CRI, if reported |
| | Rank Indicator, if reported |
| | Layer Indicator, if reported |
| | Zero padding bits, if reported |
| | PMI wideband information fields, or codebook index, if reported |
| | DI wideband information fields, if reported |
| | Wideband CQI, if reported |

FIG. 7

EP 4 021 055 A1

| CSI report number | CSI fields |
|---|---|
| CSI report #n | CRI, if reported |
| | Rank Indicator, if reported |
| | Layer Indicator, if reported |
| | Zero padding bits, if reported |
| | Indicator of the number of multiple wideband PMI feedbacks, $Q_0$, if reported |
| | PMI wideband information fields #1, or codebook index#1, if reported |
| | DI wideband information fields #1, if reported |
| | ... |
| | PMI wideband information fields #$Q_0$, or codebook index #$Q_0$, if reported |
| | DI wideband information fields #$Q_0$, if reported |
| | Wideband CQI, if reported |

FIG. 8

EP 4 021 055 A1

| UCI bit sequence | CSI report number |
|---|---|
| $a_0$ | CSI report #1 |
| $a_1$ | CSI report #2 |
| $a_2$ | ... |
| : | |
| $a_{A-1}$ | CSI report #n |

FIG. 9

EP 4 021 055 A1

| CSI report number | CSI fields |
|---|---|
| CSI report #n<br>CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | PMI wideband information fields #0, if reported |
| | DI wideband information fields #0, if reported |
| | Indicator of the number of wideband PMI feedbacks for CSI part 2, Q, if reported |

FIG. 10

| CSI report number | CSI fields |
|---|---|
| CSI report #n<br>CSI part 2 | Wideband CQI for the second TB, if present and reported |
| | Layer Indicator, if reported |
| | PMI wideband information fields #1, or codebook index#1, if reported |
| | DI wideband information fields #1, if reported |
| | ... |
| | PMI wideband information fields #Q, or codebook index #Q, if reported |
| | DI wideband information fields #Q, if reported |

FIG. 11

EP 4 021 055 A1

## FIG. 12A

| UCI bit sequence | CSI report number |
|---|---|
| $a^{(1)}_0$ <br> $a^{(1)}_1$ <br> $a^{(1)}_2$ <br> : <br> $a^{(1)}_{A(1)-1}$ | CSI report #1 if CSI report #1 is not of two parts, or CSI report #1, CSI part 1, if CSI report #1 is of two parts |
| | CSI report #2 if CSI report #1 is not of two parts, or CSI report #2, CSI part 1, if CSI report #2 is of two parts |
| | ... |
| | CSI report #n if CSI report #1 is not of two parts, or CSI report #n, CSI part 1, if CSI report #n is of two parts |

## FIG. 12B

| UCI bit sequence | CSI report number |
|---|---|
| $a^{(2)}_0$ <br> $a^{(2)}_1$ <br> $a^{(2)}_2$ <br> : <br> $a^{(2)}_{A(2)-1}$ | CSI report #1 CSI part 2, if CSI part 2 exists for CSI report #1 |
| | CSI report #2 CSI part 2, if CSI part 2 exists for CSI report #2 |
| | ... |
| | CSI report #n CSI part 2, if CSI part 2 exists for CSI report #n |

separate coding

UCI BIT GENERATION

Q WIDEBAND PMIS

| $a_0$ | $a_1$ | $\cdots$ | | | | | | | | | |

HARQ-ACK    SR    CSI part 1

| $b_0$ | $b_1$ | $\cdots$ | | | | | | | | | | | | | | | | | | | | | |

CSI part 2

CHANNEL CODING

$c_{00}$   $\cdots$
   $c_{01}$

$c_0$   $\cdots$
   $c_1$

RATE MATCHING

$c_{00}$   $\cdots$
   $c_{01}$

$\min(E_{tot}, E_{max})$ IF CSI PART 2 EXISTS,
OR $E_{tot}$ IF NOT

$c_0$   $\cdots$
   $c_1$

$E_{tot} - \min(E_{tot}, E_{max})$

FIG. 13

EP 4 021 055 A1

| CSI report number | CSI fields |
|---|---|
| CSI report #n<br><br>CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | Indicator of the number of wideband PMI feedbacks $Q$, $Q^{(1)}$, if reported |

FIG. 14

EP 4 021 055 A1

| CSI report number | CSI fields |
|---|---|
| CSI report #n<br>CSI part 2<br>wideband report #1 | Wideband CQI for the second TB, if present and reported |
| | Layer Indicator, if reported |
| | PMI wideband information fields #1, or codebook index #1, if reported |
| | DI wideband information fields #1, if reported |
| | ... |
| | PMI wideband information fields #$Q^{(1)}$, or codebook index #$Q^{(1)}$, if reported |
| | DI wideband information fields #$Q^{(1)}$, if reported |
| CSI report #n<br>CSI part 2<br>wideband report #2 | PMI wideband information fields # $Q^{(1)}$+1, or codebook index # $Q^{(1)}$+1, if reported |
| | DI wideband information fields # $Q^{(1)}$+1, if reported |
| | ... |
| | PMI wideband information fields #Q, or codebook index #Q, if reported |
| | DI wideband information fields #Q, if reported |

FIG. 15

| UCI bit sequence | CSI report number |
|---|---|
| $a^{(1)}_0$ <br> $a^{(1)}_1$ <br> $a^{(1)}_2$ <br> : <br> $a^{(1)}_{A(1)-1}$ | CSI report #1 if CSI report #1 is not of two parts, or CSI report #1, CSI part 1, if CSI report #1 is of two parts |
| | CSI report #2 if CSI report #1 is not of two parts, or CSI report #2, CSI part 1, if CSI report #2 is of two parts |
| | ... |
| | CSI report #n if CSI report #1 is not of two parts, or CSI report #n, CSI part 1, if CSI report #n is of two parts |

FIG. 16

| UCI bit sequence | CSI report number |
|---|---|
| $a^{(2)}_0$ $a^{(2)}_1$ $a^{(2)}_2$ : $a^{(2)}_{A(2)-1}$ | CSI report #1 CSI part 2 wideband report #1, if CSI part 2 exists for CSI report #1 |
| | CSI report #2 CSI part 2 wideband report #1, if CSI part 2 exists for CSI report #2 |
| | ... |
| | CSI report #n CSI part 2 wideband report #1, if CSI part 2 exists for CSI report #n |
| | CSI report #1 CSI part 2 wideband report #2, if CSI part 2 exists for CSI report #1 |
| | CSI report #2 CSI part 2 wideband report #2, if CSI part 2 exists for CSI report #2 |
| | ... |
| | CSI report #n CSI part 2 wideband report #2, if CSI part 2 exists for CSI report #n |

FIG. 17

separate coding

WIDEBAND REPORTS #1
OF ALL CSI REPORTS

WIDEBAND REPORTS #2
OF ALL CSI REPORTS

WIDEBAND REPORT #1 OF ONE CSI
REPORT ($Q^{(1)}$ WIDEBAND PMIs)

WIDEBAND REPORT #2 OF ONE CSI
REPORT (Q - Q(1) WIDEBAND PMIs)

UCI BIT GENERATION

| $a_0$ | $a_1$ | ... | | | | | | | | | |

HARQ-ACK    SR    CSI part 1

| $b_0$ | $b_1$ | ... | | | | | | | | | | | | | | | | | | | | | |

CSI part 2

CHANNEL CODING ↓

$c_{00}$  ...
$c_{01}$

$c_0$  ...
$c_1$

RATE MATCHING ↓

$c_{00}$  ...
$c_{01}$

$\min(E_{tot}, E_{max})$ IF CSI PART 2 EXISTS,
OR $E_{tot}$ IF NOT

$c_0$  ...
$c_1$

$E_{tot} - \min(E_{tot}, E_{max})$

FIG. 18

| CSI report number | CSI fields |
|---|---|
| CSI report #n<br>CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | Indicator of the number of wideband PMI feedbacks $Q^{(1)},...,Q^{(q)}$, if reported |

FIG. 19

EP 4 021 055 A1

## FIG. 20A

| CSI report number | CSI fields |
|---|---|
| CSI report #n<br>CSI part 2<br>wideband report #1 | Wideband CQI for the second TB, if present and reported |
| | Layer Indicator, if reported |
| | PMI wideband information fields #1, or codebook index#1, if reported |
| | DI wideband information fields #1, if reported |
| | ... |
| | PMI wideband information fields #$Q^{(1)}$, or codebook index #$Q^{(1)}$, if reported |
| | DI wideband information fields #$Q^{(1)}$, if reported |

## FIG. 20B

| CSI report number | CSI fields |
|---|---|
| CSI report #n<br>CSI part 2<br>wideband report #q | PMI wideband information fields #$\Sigma_{l=1}^{q-1}Q^{(l)}+1$, or codebook index #$\Sigma_{l=1}^{q-1}Q^{(l)}+1$, if reported |
| | DI wideband information fields #$\Sigma_{l=1}^{q-1}Q^{(l)}+1$, if reported |
| | ... |
| | PMI wideband information fields #$\Sigma_{l=1}^{q}Q^{(l)}$, or codebook index #$\Sigma_{l=1}^{q}Q^{(l)}$, if reported |
| | DI wideband information fields #$\Sigma_{l=1}^{q}Q^{(l)}$, if reported |

| CSI report number | CSI fields |
|---|---|
| CSI report #n<br>CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | Indicator of the number of wideband PMI feedbacks $Q^{(1)}$, if reported |
| | Indicator of the number of wideband reports q, if reported |

FIG. 21

| CSI report number | CSI fields |
|---|---|
| CSI report #n<br>CSI part 2<br>wideband report #1 | Wideband CQI for the second TB, if present and reported |
| | Layer Indicator, if reported |
| | PMI wideband information fields #1, or codebook index#1, if reported |
| | DI wideband information fields #1, if reported |
| | ... |
| | PMI wideband information fields #$Q^{(1)}$, or codebook index #$Q^{(1)}$, if reported |
| | DI wideband information fields #$Q^{(1)}$, if reported |
| | Indicator of the number of wideband PMI feedbacks $Q^{(2)}$, if q > 1 and if reported |

FIG. 22

## FIG. 23A

| CSI report number | CSI fields |
|---|---|
| CSI report #n<br>CSI part 2<br>wideband report #q-1 | PMI wideband information fields #$\Sigma_{l=1}^{q-2}Q^{(l)}+1$, or codebook index #$\Sigma_{l=1}^{q-2}Q^{(l)}+1$, if reported |
| | DI wideband information fields #$\Sigma_{l=1}^{q-2}Q^{(l)}+1$, if reported |
| | ... |
| | PMI wideband information fields #$\Sigma_{l=1}^{q-1}Q^{(l)}$, or codebook index #$\Sigma_{l=1}^{q-1}Q^{(l)}$, if reported |
| | DI wideband information fields #$\Sigma_{l=1}^{q-1}Q^{(l)}$, if reported |
| | Indicator of the number of wideband PMI feedbacks $Q^{(q)}$, if reported |

## FIG. 23B

| CSI report number | CSI fields |
|---|---|
| CSI report #n<br>CSI part 2<br>wideband report #q | PMI wideband information fields #$\Sigma_{l=1}^{q-1}Q^{(l)}+1$, or codebook index #$\Sigma_{l=1}^{q-1}Q^{(l)}+1$, if reported |
| | DI wideband information fields #$\Sigma_{l=1}^{q-1}Q^{(l)}+1$, if reported |
| | ... |
| | PMI wideband information fields #$\Sigma_{l=1}^{q}Q^{(l)}$, or codebook index #$\Sigma_{l=1}^{q}Q^{(l)}$, if reported |
| | DI wideband information fields #$\Sigma_{l=1}^{q}Q^{(l)}$, if reported |

| UCI bit sequence | CSI report number |
|---|---|
| $a^{(1)}_0$ $a^{(1)}_1$ $a^{(1)}_2$ $\vdots$ $a^{(1)}_{A(1)-1}$ | CSI report #1 if CSI report #1 is not of two parts, or CSI report #1, CSI part 1, if CSI report #1 is of two parts |
| | CSI report #2 if CSI report #1 is not of two parts, or CSI report #2, CSI part 1, if CSI report #2 is of two parts |
| | ... |
| | CSI report #n if CSI report #1 is not of two parts, or CSI report #n, CSI part 1, if CSI report #n is of two parts |

FIG. 24

| UCI bit sequence | CSI report number |
|---|---|
| $a^{(2)}_0$<br>$a^{(2)}_1$<br>$a^{(2)}_2$<br>:<br>$a^{(2)}_{A(2)-1}$ | CSI report #1 CSI part 2 wideband report #1, if CSI part 2 exists for CSI report #1 |
| | CSI report #2 CSI part 2 wideband report #1, if CSI part 2 exists for CSI report #2 |
| | ... |
| | CSI report #n CSI part 2 wideband report #1, if CSI part 2 exists for CSI report #n |
| | CSI report #1 CSI part 2 wideband report #2, if CSI part 2 exists for CSI report #1 |
| | CSI report #2 CSI part 2 wideband report #2, if CSI part 2 exists for CSI report #2 |
| | ... |
| | CSI report #n CSI part 2 wideband report #2, if CSI part 2 exists for CSI report #n |

FIG. 25

separate coding

WIDEBAND REPORTS #1
OF ALL CSI REPORTS

WIDEBAND REPORTS #2
OF ALL CSI REPORTS

WIDEBAND REPORT #1
OF ONE CSI REPORT

WIDEBAND REPORT #2
OF ONE CSI REPORT

UCI BIT GENERATION

| $a_0$ | $a_1$ | $\cdots$ | | | | | | | | | |

HARQ-ACK    SR    CSI part 1

| $b_0$ | $b_1$ | $\cdots$ | | | | | | | | | | | | | | | | | | | | | | |

CSI part 2

CHANNEL CODING

$c_{00}$  $\cdots$
$c_{01}$

$c_0$  $\cdots$
$c_1$

RATE MATCHING

$c_{00}$  $\cdots$
$c_{01}$

$\min(E_{tot}, E_{max})$ IF CSI PART 2 EXISTS,
OR $E_{tot}$ IF NOT

$c_0$  $\cdots$
$c_1$

$E_{tot} - \min(E_{tot}, E_{max})$

FIG. 26

| CSI report number | CSI fields |
|---|---|
| CSI report #n<br>CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | PMI wideband information fields #0, if reported |
| | DI wideband information fields #0, if reported |
| | Indicator of the number of wideband PMI feedbacks $Q^{(1)}, Q^{(2)}, \ldots, Q^{(m-1)}$, if m>1 and if reported |

FIG. 27

| CSI report number | CSI fields |
|---|---|
| CSI report #n<br>CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2layer PMI reporting is allowed according to the rank restriction, if reported |
| | Indicator of the number of wideband PMI feedbacks $Q^{(1)}$, $Q^{(2)}$, ... , $Q^{(m-1)}$, if m>1 and if reported |

FIG. 28

## FIG. 29A

| CSI report number | CSI fields |
|---|---|
| | Wideband CQI for the second TB, if present and reported |
| | Layer Indicator, if reported |
| | PMI wideband information fields #1, or codebook index #1, if reported |
| CSI report #n<br>CSI part 2 | DI wideband information fields #1, if reported |
| | ... |
| | PMI wideband information fields #$Q^{(1)}$, or codebook index #$Q^{(1)}$, if reported |
| | DI wideband information fields #$Q^{(1)}$, if reported |

## FIG. 29B

| CSI report number | CSI fields |
|---|---|
| | PMI wideband information fields #$\sum_{l=1}^{m-2}Q^{(l)}+1$, or codebook index #$\sum_{l=1}^{m-2}Q^{(l)}+1$, if reported |
| | DI wideband information fields #$\sum_{l=1}^{m-2}Q^{(l)}+1$, if reported |
| CSI report #n<br>CSI part m | ... |
| | PMI wideband information fields #$\sum_{l=1}^{m-1}Q^{(l)}$, or codebook index #$\sum_{l=1}^{m-1}Q^{(l)}$, if reported |
| | DI wideband information fields #$\sum_{l=1}^{m-1}Q^{(l)}$, if reported |

EP 4 021 055 A1

| CSI report number | CSI fields |
|---|---|
| CSI report #n CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | Indicator of the number of wideband PMI feedbacks $Q^{(1)}$, if reported |
| | Indicator of the number of CSI part m, if m>1 and if reported |

FIG. 30

| CSI report number | CSI fields |
|---|---|
| CSI report #n<br>CSI part 2 | Wideband CQI for the second TB, if present and reported |
| | Layer Indicator, if reported |
| | PMI wideband information fields #1, or codebook index#1, if reported |
| | DI wideband information fields #1, if reported |
| | ... |
| | PMI wideband information fields #$Q^{(1)}$, or codebook index #$Q^{(1)}$, if reported |
| | DI wideband information fields #$Q^{(1)}$, if reported |
| | Indicator of the number of wideband PMI feedbacks $Q^{(2)}$, if m>2 and if reported |

FIG. 31

## FIG. 32A

| CSI report number | CSI fields |
|---|---|
| CSI report #n<br>CSI part m-1 | PMI wideband information fields #$\Sigma_{l=1}^{m-3}Q^{(l)}$+1, or codebook index #$\Sigma_{l=1}^{m-3}Q^{(l)}$+1, if reported |
| | DI wideband information fields #$\Sigma_{l=1}^{m-3}Q^{(l)}$+1, if reported |
| | ... |
| | PMI wideband information fields #$\Sigma_{l=1}^{m-2}Q^{(l)}$, or codebook index #$\Sigma_{l=1}^{m-2}Q^{(l)}$, if reported |
| | DI wideband information fields #$\Sigma_{l=1}^{m-2}Q^{(l)}$, if reported |
| | Indicator of the number of wideband PMI feedbacks $Q^{(m-1)}$, if reported |

## FIG. 32B

| CSI report number | CSI fields |
|---|---|
| CSI report #n<br>CSI part m | PMI wideband information fields #$\Sigma_{l=1}^{m-2}Q^{(l)}$+1, or codebook index #$\Sigma_{l=1}^{m-2}Q^{(l)}$+1, if reported |
| | DI wideband information fields #$\Sigma_{l=1}^{m-2}Q^{(l)}$+1, if reported |
| | ... |
| | PMI wideband information fields #$\Sigma_{l=1}^{m-1}Q^{(l)}$, or codebook index #$\Sigma_{l=1}^{m-1}Q^{(l)}$, if reported |
| | DI wideband information fields #$\Sigma_{l=1}^{m-1}Q^{(l)}$, if reported |

EP 4 021 055 A1

| CSI report number | CSI fields |
|---|---|
| CSI report #n<br>CSI part 3 | PMI wideband information fields #$\Sigma_{l=1}^{m-3}Q^{(l)}+1$, or codebook index #$\Sigma_{l=1}^{m-3}Q^{(l)}+1$, if reported |
| | DI wideband information fields #$\Sigma_{l=1}^{m-3}Q^{(l)}+1$, if reported |
| | ... |
| | PMI wideband information fields #$\Sigma_{l=1}^{m-2}Q^{(l)}$, or codebook index #$\Sigma_{l=1}^{m-2}Q^{(l)}$, if reported |
| | DI wideband information fields #$\Sigma_{l=1}^{m-2}Q^{(l)}$, if reported |
| | Indicator of the number of wideband PMI feedbacks $Q^{(m-1)}$, if reported |
| | ... |
| | PMI wideband information fields #$\Sigma_{l=1}^{m-2}Q^{(l)}+1$, or codebook index #$\Sigma_{l=1}^{m-2}Q^{(l)}+1$, if reported |
| | DI wideband information fields #$\Sigma_{l=1}^{m-2}Q^{(l)}+1$, if reported |
| | ... |
| | PMI wideband information fields #$\Sigma_{l=1}^{m-1}Q^{(l)}$, or codebook index #$\Sigma_{l=1}^{m-1}Q^{(l)}$, if reported |
| | DI wideband information fields #$\Sigma_{l=1}^{m-1}Q^{(l)}$, if reported |

FIG. 33

## FIG. 34A

| UCI bit sequence | CSI report number |
|---|---|
| $a^{(1)}_0$<br>$a^{(1)}_1$<br>$a^{(1)}_2$<br>$\vdots$<br>$a^{(1)}_{A(1)-1}$ | CSI report #1 if CSI report #1 is not of more than one parts, or CSI report #1, CSI part 1, if CSI report #1 is of m parts |
| | CSI report #2 if CSI report #1 is not of more than one parts, or CSI report #2, CSI part 1, if CSI report #2 is of m parts |
| | ... |
| | CSI report #n if CSI report #1 is not of more than one parts, or CSI report #n, CSI part 1, if CSI report #n is of m parts |

## FIG. 34B

| UCI bit sequence | CSI report number |
|---|---|
| $a^{(m)}_0$<br>$a^{(m)}_1$<br>$a^{(m)}_2$<br>$\vdots$<br>$a^{(m)}_{A(m)-1}$ | CSI report #1, CSI part m, if CSI part m exists for CSI report #1 |
| | CSI report #2, CSI part m, if CSI part m exists for CSI report #2 |
| | ... |
| | CSI report #n, CSI part m, if CSI part m exists for CSI report #n |

FIG. 35

FIG. 36

FIG. 37

EP 4 021 055 A1

FIG. 38

EP 4 021 055 A1

10, 20

```
1001                    1007              1004
┌──────────────┐      ╷      ┌──────────────────┐
│              │      │      │  COMMUNICATION   │
│  PROCESSOR   │──────●──────│    APPARATUS     │
│              │      │      │                  │
└──────────────┘      │      └──────────────────┘
                      │
1002                  │               1005
┌──────────────┐      │      ┌──────────────────┐
│              │      │      │                  │
│   MEMORY     │──────●──────│     INPUT        │
│              │      │      │   APPARATUS      │
└──────────────┘      │      └──────────────────┘
                      │
1003                  │               1006
┌──────────────┐      │      ┌──────────────────┐
│              │      │      │     OUTPUT       │
│   STORAGE    │──────●──────│   APPARATUS      │
│              │             │                  │
└──────────────┘             └──────────────────┘
```

FIG. 39

**INTERNATIONAL SEARCH REPORT**

| International application No. |
|---|
| PCT/JP2019/033177 |

A.  CLASSIFICATION OF SUBJECT MATTER
H04W 16/28(2009.01)i; H04W 24/10(2009.01)i
FI: H04W24/10; H04W16/28 130

According to International Patent Classification (IPC) or to both national classification and IPC

B.  FIELDS SEARCHED

Minimum documentation searched (classification system followed by classification symbols)
H04B7/24-7/26; H04W4/00-99/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | 3rd Generation Partnership Project, "Technical Specification Group Radio Access Network; NR; Multiplexing and channel coding (Release 15)", 3GPP TS 38.212 V15.6.0 (2019-06), 24 June 2019, 6.3.1.1.2 | 1-6 |
| A | FRAUNHOFER IIS, FRAUNHOFER HHI, "Enhancements on Type-II CSI reporting[online]", 3GPP TSG RAN WG1 #95 R1-1813130, 16 November 2018, pp. 1-6, chapter 2 | 1-6 |

☐  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 February 2020 (14.02.2020) | 25 February 2020 (25.02.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010